# EUROPEAN PATENT SPECIFICATION

(11) **EP 4 428 209 B1**
(45) Date of publication and mention of the grant of the patent: **09.12.2026**
(21) Application number: 24162217.4
(22) Date of filing: 08.03.2024
(51) Int. Cl.: C09J 127/16, H01M 50/00

(54) **ADHESIVE COMPOSITION**
KLEBSTOFFZUSAMMENSETZUNG
COMPOSITION ADHÉSIVE

(30) Priority: 10.03.2023 KR 20230031870
(43) Date of publication of application: 11.09.2024
(73) Proprietor: SK On Co., Ltd., Seoul 03149 (KR)
(72) Inventor: OH, Won Je, 34124 Daejeon (KR); PARK, Sun Min, 34124 Daejeon (KR); KIM, Sang Mo, 34124 Daejeon (KR); JEONG, Taek Eon, 34124 Daejeon (KR); CHOI, Seung Won, 34124 Daejeon (KR)
(74) Representative: Prüfer & Partner mbB Patentanwälte · Rechtsanwälte

(56) References cited:
- CN-B- 112 490 023
- EA-B1- 019 608
- US-A1- 2017 179 456
- SITA M DAMARAJU: "Structural changes in PVDF fibers due to electrospinning and its effect on biological function", vol. 8, no. 4, 1 August 2013 (2013-08-01), GB, pages 045007, XP093153370, ISSN: 1748-6041, Retrieved from the Internet <URL:https://iopscience.iop.org/article/10.1088/1748-6041/8/4/045007> DOI: 10.1088/1748-6041/8/4/045007
- SAEED ASHTIANI: "A fundamental study of Morphology Prediction for Nano and Microstructure of PVDF for Membrane Fabrication and Film Formation Applications", INTERNATIONAL JOURNAL OF ADVANCED ENGINEERING AND NANO TECHNOLOGY (IJAENT), 1 April 2018 (2018-04-01), pages 1 - 4, XP093154135, Retrieved from the Internet <URL:https://www.ijaent.org/wp-content/uploads/papers/v3i9/I0402043918.pdf>

## Description

### BACKGROUND

### 1. Field of the Invention

The present disclosure relates to an adhesive composition. In addition, the present disclosure relates to a battery to which the adhesive composition is applied.

### 2. Discussion of Related Art

Demand for mobile devices such as smartphones, tablet PCs, and wireless earphones has recently increased. As the development of electric vehicles, axial batteries for energy storage, robots, satellites begins in earnest, research on high-performance secondary batteries capable of repeated charging and discharging as an energy source is being actively conducted.

Currently commercialized secondary batteries include nickel cadmium batteries, nickel hydrogen batteries, nickel zinc batteries, and lithium batteries, and among them, compared to nickel-based secondary batteries, lithium batteries have almost no memory effect, so they can be freely charged and discharged and have a very low self-discharge rate and high energy density.

The battery assembly process includes a winding process, which involves winding a sheet-shaped positive electrode and negative electrode, and a separator interposed between the positive electrode and the negative electrode, or a stacking process, which involves stacking a positive electrode, a negative electrode, and a separator. Through the battery assembly process, an electrode assembly (so-called jelly roll) can be manufactured.

The electrode assembly can be wrapped around a separator and finished by adhering and fixing it to the separator with an adhesive in the final process. A battery cell is manufactured by accommodating the electrode assembly in an exterior material and filling the inside with an electrolyte. Electrolyte decomposition may occur due to problems between the electrolyte and the adhesive or between the electrolyte and other components.

In particular, when the adhesive component in the adhesive dissolves in the electrolyte, adhesive strength may be reduced. In the case of one conventionally used adhesive, the adhesive strength of the adhesive was reduced due to electrolyte decomposition caused by an inappropriate combination of the adhesive component and the solvent component, which dissolves or disperses the adhesive component. As a result, the separator is unwound due to reduced adhesive strength, and the positive electrode and the negative electrode come into contact with each other, which can cause safety-related problems.

In addition, other conventionally used adhesives have an adhesive component that has little effect on electrolyte decomposition. However, the adhesive had a problem in that the solvent component evaporates before the adhesive component exhibits adhesive strength due to an inappropriate combination of the adhesive component and the solvent component, which dissolves or disperses it. Document CN 112 490 023 A is known, which discloses a preparation method of a gel electrolyte as well as a preparation method of a supercapacitor. The disclosed preparation method of the gel electrolyte comprises the following steps: dissolving PVDF-HFP in an NMP/acetone mixed solvent, uniformly coating the obtained PVDF-HFP glue solution on a planar substrate, and separating and drying to obtain an electrolyte matrix; and compounding the electrolyte matrix with the electrolyte to obtain the gel electrolyte. Furthermore, document EA 019 608 B1 is known, which discloses a method for producing a biologically active coating, specifically for producing porous biologically active coatings on metal and ceramic implants. The coating reveals hydrophilic properties. Polyvinylidene fluoride powder is dissolved in a mixture of acetone and butyl acetate. A mixture of hydroxyapatite, tribasic calcium phosphate and butyl acetate is further disclosed. After a homogenization step, the solution of polyvinylidene fluoride in the mixed solvent and the dispersed hydroxyapatite and tribasic calcium phosphate powders are applied onto implants by pneumatic spraying at a temperature of 90 °C or less. A coating is formed in a chamber furnace at not less than 180 °C. Then, the coating is modified by a layer of calcium phosphates via high-frequency magnetron deposition of a target made from hydroxyapatite in an argon atmosphere. Furthermore, document *"*Structural changes in PVDF fibers due to electrospinning and its effect on biological function" by S. M. Damaraju et al., Biomed. Mater. 8, 2013, 045007, DOI: 10.1088/1748-6041/8/4/045007, is known, which discloses polyvinylidene fluoride (PVDF) as a potential scaffold for bone tissue engineering due to its proven biocompatibility and piezoelectric property, wherein it can generate electrical activity when mechanically deformed. PVDF scaffolds were prepared by electrospinning using different voltages in a range of 12 kV to 30 kV, and then evaluated for the presence of the piezoelectric β-crystal phase and its effect on biological function. Electrospinning PVDF resulted in the formation of the piezoelectric β-phase with the highest β-phase fraction of 72% for electrospun PVDF at 25 kV. The preparation of a solution of PVDF in a mixture of acetone and *N,N-*dimethylacetamide (DMAC) is further disclosed. The weight ratio of the solvents acetone and DMAC is 1:1. Furthermore, document US 2017 0179456 A1 is known, which discloses a separator including a porous bonding layer, and an electrochemical battery including the separator. The separator includes a porous substrate, and a porous bonding layer on one surface or both surfaces of the porous substrate. The porous bonding layer includes a first polyvinylidene fluoride-based polymer which includes a polyvinylidene fluoride-based homopolymer or a polyvinylidene fluoride-based copolymer that includes a vinylidene fluoride repeating unit and a hexafluoropropylene repeating unit. The porous bonding layer further includes a second polyvinylidene fluoride-based polymer which includes a vinylidene fluoride repeating unit and a (meth)acrylate repeating unit, or a vinylidene fluoride repeating unit and a repeating unit of a monomer that includes at least one of an epoxy group, a hydroxy group, a carboxyl group, an ester group, or an acid anhydride group.

### SUMMARY OF THE INVENTION

The present disclosure is directed to providing an adhesive composition, which solves the problem of reduced adhesive strength due to electrolyte decomposition.

The present disclosure is also directed to providing an adhesive composition, which prevents a solvent component from evaporating prematurely through an appropriate combination of the adhesive component and the solvent component, which dissolves or disperses the adhesive component, and exhibits sufficient adhesive strength by increasing the solubility of the adhesive component through the appropriate combination.

The present disclosure is also directed to providing an adhesive composition, which may be applied to a desired location by suppressing the formation of droplets.

The present disclosure is also directed to providing an adhesive composition, which is easily stored due to small changes over time at room temperature and minimizes the impact on an electrode assembly due to its low separator permeability.

The present disclosure is also directed to providing an adhesive composition with excellent stability and processability.

The present disclosure is also directed to providing an adhesive formed from the adhesive composition, and a battery cell and a battery cell assembly including the adhesive. In addition, the present disclosure is directed to providing an electrical device including one or more selected from the group consisting of the battery cell and the battery cell assembly.

The present disclosure may be widely applied to electric vehicles, battery charging stations, energy storage systems (ESSs), and green technology fields such as photovoltaics and wind power utilizing batteries. In addition, the present disclosure may be used for eco-friendly mobility including electric and hybrid vehicles to prevent climate change by reducing air pollution and greenhouse gas emissions.

According to the present disclosure, there is provided an adhesive composition, which includes a resin component, which includes a polyvinylidene fluoride (PVDF) polymer, and a solvent component, which includes a first solvent and a second solvent. In the adhesive composition, the first solvent has a vapor pressure (P1) of 100 mmHg or more at 20 °C. In the adhesive composition, the second solvent has a vapor pressure (P2) of 50 mmHg or less at 20 °C. The vapour pressure in Pascal can be obtained by multiplying the mmHg value with 133.3. In the adhesive composition, the solubility of the resin component at 25 °C in 100 g of a mixture of the first solvent and the second solvent at a weight ratio of 5:5 is 20 g or more.

In the adhesive composition according to an aspect of the present disclosure, AE according to Equation 1 below may be 60% or more. [Equation 1] $AE = Af / AiX 100 \left(%\right)$

**In** Equation 1, Ai is the peel strength measured at 25 °C after applying the adhesive composition to a polyethylene terephthalate (PET) film, drying it until all solvent components evaporate, attaching an exposed side of the dried adhesive composition to a metal plate, and peeling the PET film at a peeling angle of 90 degrees and a peeling speed of 300 mm/min, and Af is the peel strength measured at 25 °C after applying the adhesive composition to a polyethylene terephthalate (PET) film, drying it until all solvent components evaporate, impregnating it with an electrolyte including a carbonate solvent for 20 seconds, drying it until all of the electrolyte evaporates, attaching an exposed side of the dried adhesive composition to a metal plate, and peeling the PET film at a peeling angle of 90 degrees and a peeling speed of 300 mm/min.

**In** the adhesive composition according to an aspect of the present disclosure, Af in Equation 1 above may be 0.1 N/mm or more.

**In** the adhesive composition according to an aspect of the present disclosure, the polyvinylidene fluoride (PVDF) polymer may include one or more selected from the group consisting of a polyvinylidene fluoride homopolymer, a polyvinylidene fluoride-hexafluoropropylene copolymer (PVDF-HFP), polyvinylidene fluoride-trichloroethylene (PVDF-TCE), and polyvinylidene fluoride-chlorotrifluoroethylene (PVDF-CTFE).

**In** the adhesive composition according to the present disclosure, the resin component is included in a range of 8 wt% to 11 wt% based on the total weight, and the solvent component includes the first solvent in an amount of 60 wt% to 80 wt% based on the total weight of the solvent component.

**In** the adhesive composition according to an aspect of the present disclosure, the ratio (P1/P2) of the vapor pressure of the first solvent (P1) to the vapor pressure of the second solvent (P2) may range from 5 to 50.

**In** the adhesive composition according to an aspect of the present disclosure, the first solvent may have a normal boiling point (PB1) of 100 °C or less. In the adhesive composition, the second solvent may have a normal boiling point (PB2) exceeding 100 °C.

**In** the adhesive composition according to an aspect of the present disclosure, the ratio (PB1/PB2) of the normal boiling point of the first solvent (PB1) to the normal boiling point of the second solvent (PB2) may range from 0.01 to 0.95.

**In** the adhesive composition according to an aspect of the present disclosure, SPR1 according to Equation 2 below may range from 0.8 to 1.2. [Equation 2] $SPR 1 = SP 1 / SPP$

In Equation 2, SP1 is the solubility parameter (units: MPa1/2) at 25 °C for the first solvent, and SPP is the solubility parameter (units: MPa1/2) at 25 °C for the resin component.

In the adhesive composition according to an aspect of the present disclosure, SPR2 according to Equation 3 below may range from 0.8 to 1.2. [Equation 3] $SPR 2 = SP 1 / SP 2$

**In** Equation 3, SP1 is the solubility parameter (units: MPa1/2) at 25 °C for the first solvent, and SP2 is the solubility parameter (units: MPa1/2) at 25 °C for the second solvent.

**In** the adhesive composition according to an aspect of the present disclosure, the first solvent may include a ketone group in its molecule. In the adhesive composition, the second solvent may include an ester group in its molecule.

**In** the adhesive composition according to an aspect of the present disclosure, the contact angle of the adhesive composition for the PET film at 25 °C may be smaller than the contact angle of the first solvent for the PET film at 25 °C.

**In** the adhesive composition according to the present disclosure, the solvent component includes the first solvent in an amount of 60 wt% to 80 wt% based on the total weight of the solvent component.

**In** the adhesive composition according to an aspect of the present disclosure, the solvent component may include the second solvent in an amount of 25 parts by weight to 100 parts by weight based on 100 parts by weight of the first solvent.

According to another aspect of the present disclosure, there is provided a battery cell, which may include an electrode assembly, which includes a positive electrode, a negative electrode, and a separator interposed between the positive electrode and the negative electrode, and a finishing material. In addition, an adhesive formed from the adhesive composition according to an aspect of the present disclosure may be provided on at least a portion of the finishing material.

**In** the battery cell according to another aspect of the present disclosure, the finishing material may be at least a part of the separator of the electrode assembly, and at least a portion of each of the finishing material and the electrode assembly may be bonded by the adhesive.

According to still another aspect of the present disclosure, there is provided a battery cell assembly, which may include one or more battery cells, which may be the battery cell according to another aspect of the present disclosure. The battery cell assembly may be, for example, a battery module or a battery pack. The battery pack may include a battery module according to still another aspect of the present disclosure or directly include a battery cell (so-called cell-to-pack).

According to yet another aspect of the present disclosure, there is provided an electrical device, which may include one or more selected from the group consisting of one or more battery cells and one or more battery cell assemblies, and the battery cell may be the battery cell according to another aspect of the present disclosure and the battery cell assembly may be the battery cell assembly according to still another aspect of the present disclosure.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a view briefly illustrating an exemplary structure of a battery module according to an embodiment of the present disclosure;
FIG. 2 is a view briefly illustrating an exemplary structure of a battery pack according to an embodiment of the present disclosure; and
FIG. 3 illustrates a method of measuring evaporation time.

### DETAILED DESCRIPTION OF EXEMPLARY EMBODIMENTS

**In** terms of physical properties mentioned in the present disclosure, when a temperature at the time of measurement affects physical properties, unless otherwise specified, the physical properties are those measured at room temperature and normal pressure.

The term "room temperature" used in the present disclosure refers to a natural temperature in an unheated and uncooled state, and may be, for example, any temperature ranging from 10 °C to 30 °C, such as about 15 °C or higher, about 18 °C or higher, about 20 °C or higher, about 23 °C or higher, about 27 °C or lower, or 25 °C. Unless otherwise specified in the present disclosure, the unit of temperature is degrees Celsius (°C).

**In** terms of the physical properties mentioned in the present disclosure, when the measured pressure affects the physical properties, unless otherwise specified, the physical properties are those measured at normal pressure.

The term "normal pressure" used in the present disclosure refers to a natural pressure in a state where the pressure is not increased and decreased, which is generally atmospheric pressure ranging from about 700 mmHg to 800 mmHg.

The phrase "a to b" used in the present disclosure refers to a range of a to b including a and b. For example, including a to b parts by weight is the same as including a range of a to b parts by weight.

The term "substitution" used in the present disclosure means that a hydrogen atom bonded to a carbon atom of a compound is changed to another substituent, and the position to be substituted is not particularly limited as long as it is the position where the hydrogen atom is substituted, that is, a position where the substituent can be substituted, and when two or more substituents are substituted, the substituents may be the same or different.

The term "substituent" used in the present disclosure refers to an atom or atom group that replaces one or more hydrogen atoms on the parent chain of a hydrocarbon. In addition, the substituent is described below but is not limited thereto, and the substituent may be further substituted with a substituent described below or may not be substituted with any substituent, unless otherwise specified in the present disclosure.

Unless otherwise specified, the term "alkyl group" or "alkylene group" used in the present disclosure may refer to a straight or branched chain alkyl or alkylene group having 1 to 20 carbon atoms, 1 to 16 carbon atoms, 1 to 12 carbon atoms, 1 to 8 carbon atoms, or 1 to 6 carbon atoms, or a cyclic alkyl or alkylene group having 3 to 20 carbon atoms, 3 to 16 carbon atoms, 3 to 12 carbon atoms, 3 to 8 carbon atoms, or 3 to 6 carbon atoms. The cyclic alkyl or alkylene group includes an alkyl or alkylene group, which has only a ring structure, and an alkyl group or alkylene group, which includes a ring structure in the structure. For example, both a cyclohexyl group and a methyl cyclohexyl group are cyclic alkyl groups. For example, an alkyl group or alkylene group may be specifically methyl(ene), ethyl(ene), n-propyl(ene), isopropyl(ene), n-butyl(ene), isobutyl(ene), tert-butyl(ene), sec-butyl(ene), 1-methyl-butyl(ene), 1-ethyl-butyl(ene), n-pentyl(ene), isopentyl(ene), neopentyl(ene), tert-pentyl(ene), n-hexyl(ene), 1-methylpentyl(ene), 2-methylpentyl(ene), 4-methyl-2-pentyl(ene), 3,3-dimethylbutyl(ene), 2-ethylbutyl(ene), n-heptyl(ene), 1-methylhexyl(ene), n-octyl(ene), tert-octyl(ene), 1-methylheptyl(ene), 2-ethylhexyl(ene), 2-propylpentyl(ene), n-nonyl(ene), 2,2-dimethylheptyl(ene), 1-ethylpropyl(ene), 1,1-dimethylpropyl(ene), isohexyl(ene), 2-methylpentyl(ene), 4-methylhexyl(ene), and 5-methylhexyl(ene), but is not limited thereto. In addition, a cycloalkyl group or cycloalkylene group may be specifically cyclopropyl(ene), cyclobutyl(ene), cyclopentyl(ene), 3-methylcyclopentyl(ene), 2,3-dimethylcyclopentyl(ene), cyclohexyl(ene), 3-methylcyclohexyl(ene), 4-methylcyclohexyl(ene), 2,3-dimethylcyclohexyl(ene), 3,4,5-trimethylcyclohexyl(ene), 4-tert-butylcyclohexyl(ene), cycloheptyl(ene), and cyclooctyl(ene), but is not limited thereto.

Unless otherwise specified, the term "alkenyl group" or "alkenylene group" used in the present disclosure may refer to a straight or branched chain acyclic alkenyl group or alkenylene group having 2 to 20 carbon atoms, 2 to 16 carbon atoms, 2 to 12 carbon atoms, 2 to 8 carbon atoms, or 2 to 6 carbon atoms, or a cyclic alkenyl group or alkenylene group having 3 to 20 carbon atoms, 3 to 16 carbon atoms, 3 to 12 carbon atoms, 3 to 8 carbon atoms, or 3 to 6 carbon atoms. The cyclic alkenyl group or alkenylene group includes a ring-structured alkenyl group or alkenylene group. For example, an alkenyl group or alkenylene group may be ethenyl(ene), n-propenyl(ene), isopropenyl(ene), n-butenyl(ene), isobutenyl(ene), tert-butenyl(ene), sec-butenyl(ene), 1-methylbutenyl(ene), 1-ethyl-butenyl(ene), n-pentenyl(ene), isopentenyl(ene), neopentenyl(ene), tert-pentenyl(ene), n-hexenyl(ene), 1-methylpentenyl(ene), 2-methylpentenyl(ene), 4-methyl-2-pentenyl(ene), 3,3-dimethylbutenyl(ene), 2-ethylbutenyl(ene), n-heptenyl(ene), 1-methylhexenyl(ene), n-octenyl(ene), tert-octenyl(ene), 1-methylheptenyl(ene), 2-ethylhexenyl(ene), 2-propylpentenyl(ene), n-nonylenyl(ene), 2,2-dimethylheptenyl(ene), 1-ethylpropenyl(ene), 1,1-dimethylpropenyl(ene), isohexenyl(ene), 2-methylpentenyl(ene), 4-methylhexenyl(ene), and 5-methylhexenyl(ene), but is not limited thereto. In addition, a cycloalkenyl group or cycloalkenylene group may be specifically cyclopropenyl(ene), cyclobutenyl(ene), cyclopentenyl(ene), 3-methylcyclopentenyl(ene), 2,3-dimethylcyclopentenyl(ene), cyclohexenyl(ene), 3-methylcyclohexenyl(ene), 4-methylcyclohexenyl(ene), 2,3-dimethylcyclohexenyl(ene), 3,4,5-trimethylcyclohexenyl(ene), 4-tert-butylcyclohexenyl(ene), cycloheptenyl(ene), and cyclooctenyl(ene), but is not limited thereto.

The term "alkynyl group" or "alkynylene group" used in the present disclosure may refer to a straight or branched chain acyclic alkynyl group or alkynylene group having 2 to 20 carbon atoms, 2 to 16 carbon atoms, 2 to 12 carbon atoms, 2 to 8 carbon atoms, or 2 to 6 carbon atoms, or a cyclic alkynyl group or alkynylene group having 3 to 20 carbon atoms, 3 to 16 carbon atoms, 3 to 12 carbon atoms, 3 to 8 carbon atoms, or 3 to 6 carbon atoms. The cyclic alkynyl group or alkynylene group includes a ring-structured alkynyl group or alkynylene group. For example, an alkynyl group or alkynylene group may be ethynyl(ene), n-propynyl(ene), isopropynyl(ene), n-butynyl(ene), isobutynyl(ene), tert-butynyl(ene), sec-butynyl(ene), 1-methyl-butynyl(ene), 1-ethyl-butynyl(ene), n-pentynyl(ene), isopentynyl(ene), neopentynyl(ene), tert-pentynyl(ene), n-hexynyl(ene), 1-methylpentynyl(ene), 2-methylpentynyl(ene), 4-methyl-2-pentynyl(ene), 3,3-dimethylbutynyl(ene), 2-ethylbutynyl(ene), n-heptynyl(ene), 1-methylhexynyl(ene), n-octynyl(ene), tert-octynyl(ene), 1-methylheptynyl(ene), 2-ethylhexynyl(ene), 2-propylpentynyl(ene), n-noninyl(ene), 2,2-dimethylheptynyl(ene), 1-ethylpropynyl(ene), 1,1-dimethylpropynyl(ene), isohexynyl(ene), 2-methylpentynyl(ene), 4-methylhexynyl(ene), and 5-methylhexynyl(ene), but is not limited thereto. In addition, a cycloalkynyl group or cycloalkynylene group may be specifically cyclopropynyl(ene), cyclobutynyl(ene), cyclopentynyl(ene), 3-methylcyclopentynyl(ene), 2,3-dimethylcyclopentynyl(ene), cyclohexynyl(ene), 3-methylcyclohexynyl(ene), 4-methylcyclohexynyl(ene), 2,3-dimethylcyclohexynyl(ene), 3,4,5-trimethylcyclohexynyl(ene), 4-tert-butylcyclohexynyl(ene), cycloheptynyl(ene), and cyclooctynyl(ene), but is not limited thereto.

Each of the alkyl group, alkylene group, alkenyl group, alkenylene group, alkynyl group, and alkynylene group may be arbitrarily substituted with one or more substituents or may be unsubstituted and remain as hydrogen (H). The substituents may be one or more selected from the group consisting of a halogen atom, an aryl group, a heteroaryl group, an epoxy group, an alkoxy group, a cyano group, a carboxyl group, an acryloyl group, a methacryloyl group, an acryloyloxy group, a methacryloyloxy group, a carbonyl group, and a hydroxy group, but is not limited thereto.

**In** the present disclosure, the number of carbon atoms in an alkyl group, alkylene group, alkenyl group, alkenylene group, alkynyl group, and alkynylene group is the number of carbon atoms in the structure of the main chain, excluding the number of carbon atoms included in the substituent, unless otherwise specified.

The term "aromatic group" used in the present disclosure may encompass an aryl group and a heteroaryl group.

The term "aryl group" used in the present disclosure refers to an aromatic ring in which one hydrogen atom is removed from an aromatic hydrocarbon ring, and the aromatic hydrocarbon ring may include a monocyclic or polycyclic ring. The number of carbon atoms of the aryl group is not particularly limited, but unless otherwise specified, the aryl group may be an aryl group having 6 to 30 carbon atoms, 6 to 26 carbon atoms, 6 to 22 carbon atoms, 6 to 20 carbon atoms, 6 to 18 carbon atoms, or 6 to 15 carbon atoms. In addition, the term "arylene group" used in the present disclosure refers to an aryl group having two bonding sites, that is, a bivalent group. Except that each of these is a bivalent group, the above-mentioned description of the aryl group may be applied. The aryl group may be, for example, a phenyl group, a phenylethyl group, a phenylpropyl group, a benzyl group, a tolyl group, a xylyl group, or a naphthyl group, but is not limited thereto.

The term "heteroaryl group" used in the present disclosure is an aromatic ring including one or more heteroatoms other than carbon, and the heteroatom may specifically include one or more atoms selected from the group consisting of nitrogen (N), oxygen (O), sulfur (S), selenium (Se), and telenium (Te). The atom constituting the ring structure of the heteroaryl group may be called a ring atom. Heteroaryl groups may include a monocyclic or polycyclic ring. The number of carbon atoms of the heteroaryl group is not particularly limited, but unless otherwise specified, the heteroaryl group may have 2 to 30 carbon atoms, 2 to 26 carbon atoms, 2 to 22 carbon atoms, 2 to 20 carbon atoms, 2 to 18 carbon atoms, or 2 to 15 carbon atoms. In another example, the number of ring atoms of the heteroaryl group is not particularly limited but may be a heteroaryl group having 5 to 30 ring atoms, 5 to 25 ring atoms, 5 to 20 ring atoms, 5 to 15 ring atoms, 5 to 10 ring atoms, or 5 to 8 ring atoms. The heteroaryl group may be, for example, a thiophene group, a furan group, a pyrrole group, an imidazolyl group, a thiazolyl group, an oxazolyl group, an oxadiazolyl group, a triazolyl group, a pyridyl group, a bipyridyl group, a pyrimidyl group, a triazinyl group, an acridyl group, a pyridazinyl group, a pyrazinyl group, a quinolinyl group, a quinazolinyl group, a quinoxalinyl group, a phthalazinyl group, a pyridopyrimidinyl group, a pyridopyrazinyl group, a pyrazinopyrazinyl group, an isoquinolinyl group, an indole group, a carbazolyl group, a benzoxazolyl group, a benzimidazolyl group, a benzothiazolyl group, a benzocarbazolyl group, a dibenzocarbazolyl group, a benzothiophene group, a dibenzothiophene group, a benzofuran group, a dibenzofuran group, a benzosilol group, a dibenzosilol group, a phenanthrolinyl group, an isoxazolyl group, a thiadiazolyl group, a phenothiazinyl group, a phenoxazine group, and a condensation structure thereof, but is not limited thereto.

The term "heteroarylene group" used in the present disclosure refers to a heteroaryl group having two bonding sites, that is, a bivalent group. Except that each of these is a bivalent group, the above-mentioned description of the heteroaryl group may be applied.

Each of the aryl group and heteroaryl group may be arbitrarily substituted with one or more substituents or may be unsubstituted and remain as hydrogen (H). The substituent may be one or more selected from the group consisting of a halogen atom, an aryl group, a heteroaryl group, an epoxy group, an alkoxy group, a cyano group, a carboxyl group, an acryloyl group, a methacryloyl group, an acryloyloxy group, a methacryloyloxy group, a carbonyl group, and a hydroxy group, but is not limited thereto.

**In** the present disclosure, unless otherwise specified, the number of carbon atoms of the aryl group and heteroaryl group is the carbon number of the structure of the main chain, excluding the carbon number included in the substituent. Unless otherwise specified, the number of ring atoms in the heteroaryl group is the number of ring atoms of the main chain, excluding the number of ring atoms included in the substituent.

The present disclosure may provide an adhesive composition, which solves the problem of reduced adhesive strength due to electrolyte decomposition. The present disclosure may provide an adhesive composition, which prevents the solvent component from evaporating prematurely through an appropriate combination of the adhesive component and the solvent component, which dissolves or disperses the adhesive component, and exhibits sufficient adhesive strength by increasing the solubility of the adhesive component through the appropriate combination. The present disclosure may provide an adhesive composition, which may be applied to a desired location by suppressing the formation of droplets. The present disclosure may provide an adhesive composition, which is easily stored due to small changes over time at room temperature and minimizes the impact on an electrode assembly due to its low separator permeability. The present disclosure may provide an adhesive composition with excellent stability and processability.

The present disclosure may provide an adhesive formed from the adhesive composition, a battery cell and a battery cell assembly including the adhesive. In addition, the present disclosure may provide an electrical device including one or more selected from the group consisting of the battery cell and the battery cell assembly.

The adhesive composition according to an embodiment of the present disclosure may include a resin component and a solvent component. The solvent component may dissolve or disperse the resin component. It may be more appropriate for the solvent component to dissolve the resin component.

The term "dissolution" used in the present disclosure may be defined as when the solubility of the solute in the solvent measured at 25 °C is 0.01 g or more. Solubility may be measured according to the solubility measurement method in <Methods of measuring physical properties> described later. In a specific example, the solvent may be a solvent component of the adhesive composition according to an embodiment of the present disclosure, and the solute may be a resin component of the adhesive composition. In other words, it may be more appropriate for the resin component to have a solubility of 0.01 g or more at 25 °C with respect to the solvent component.

**In** the adhesive composition according to an embodiment of the present disclosure, it may be appropriate for the solvent component to be a liquid at room temperature.

**In** the adhesive composition according to an embodiment of the present disclosure, the solvent component may include a solvent that is relatively harmless to the human body. Since the solvent component of the adhesive composition includes a solvent that is relatively harmless to the human body, safety may be ensured during the manufacturing process.

The phrase "a solvent that is relatively harmless to the human body" may mean that the health hazard score of NFPA 704 is 0, 1, or 2. When the health hazard score of NFPA 704 is not evaluated, a solvent, which does not have two or more GHS pictograms selected from the group consisting of GHS06, GHS07, and GHS08, may be evaluated as a solvent that is relatively harmless to the human body.

**In** the adhesive composition according to an embodiment of the present disclosure, the solvent component may include one or more solvents. In the adhesive composition, the solvent component may preferably include two or more solvents.

**In** the adhesive composition according to the present disclosure, the solvent component includes a first solvent and a second solvent. The first solvent and the second solvent are different types of solvents.

**In** the adhesive composition according to an embodiment of the present disclosure, the second solvent may have a vapor pressure of 1 mmHg or more at 20 °C. The vapor pressure of the first solvent and the second solvent are each independent. The adhesive composition may be implemented with the solvent component combined above, which may prevent the solvent component from evaporating prematurely and ensure that the resin component including an adhesive component exhibits sufficient adhesive strength.

The term "vapor pressure" used in the present disclosure refers to the saturated vapor pressure when a liquid or solid material is in dynamic equilibrium in a closed system. The vapor pressure may be a well-known value at 20 °C, which is presented in the International Chemical Safety Cards (ICSCs). In addition, when it is not widely known, the vapor pressure may be measured according to the vapor pressure measurement method described in Chapter VIII of Non-Patent Document 6.

**In** the present disclosure, whether the solvent component is prevented from evaporating prematurely may be confirmed through the evaporation time. The evaporation time may be specifically measured according to <Methods of measuring physical properties>. When the evaporation time, which is measured in the above way, is less than about 120 seconds, it is judged that the solvent component evaporates first at an earlier point in time.

The resin component may include a polymer, which is an adhesive component in itself, or may include a polymer, which becomes an adhesive component through a drying or curing reaction.

**In** the adhesive composition according to an embodiment of the present disclosure, the resin component may include a polyvinylidene fluoride (PVDF) polymer.

**In** the adhesive composition according to an embodiment of the present disclosure, the polyvinylidene fluoride polymer included in the resin component is not limited as long as its structure includes a chemical structure in which vinylidene difluoride is formed through polymerization. Since the resin component includes a polyvinylidene fluoride polymer, the problem of reduced adhesive strength due to electrolyte decomposition may be solved.

**In** the adhesive composition according to an embodiment of the present disclosure, the polyvinylidene fluoride polymer included in the resin component may include, for example, one or more selected from the group consisting of a polyvinylidene fluoride homopolymer, a polyvinylidene fluoride-hexafluoropropylene copolymer (PVdF-HFP), polyvinylidene fluoride-trichloroethylene (PVDF-TCE), and polyvinylidene fluoride-chlorotrifluoroethylene (PVDF-CTFE).

**In** the adhesive composition according to an embodiment of the present disclosure, the resin component may further include a polymer, which is an adhesive component in itself, or a polymer, which becomes an adhesive component through a drying or curing reaction in addition to the polyvinylidene fluoride polymer. In addition, even when the additional polymer is impregnated with an electrolyte, adhesive performance may be less likely to be reduced.

**In** the adhesive composition according to an embodiment of the present disclosure, the resin component may have a weight average molecular weight (MW) of 50,000 g/mol or more, 100,000 g/mol or more, 150,000 g/mol or more, 200,000 g/mol or more, 250,000 g/mol or more, 300,000 g/mol or more, 350,000 g/mol or more, or 400,000 g/mol or more, or 10,000,000 g/mol or less, 5,000,000 g/mol or less, 1,000,000 g/mol or less, 900,000 g/mol or less, 800,000 g/mol or less, 700,000 g/mol or less, 600,000 g/mol or less, or 500,000 g/mol or less. The resin component may have a weight average molecular weight (MW) within a range set by appropriately selecting the upper and lower limits described above.

**In** the adhesive composition according to an embodiment of the present disclosure, the resin component may have a polydispersity index (PDI) of 1 or more, 1.5 or more, 2 or more, 2.5 or more, or 3 or more, 10 or less, 9 or less, 8 or less, 7 or less, 6 or less, 5 or less, or 4 or less. The resin component may have a polydispersity index (PDI) within a range set by appropriately selecting the upper and lower limits described above.

The adhesive composition may exhibit excellent adhesive strength by including a resin component whose weight average molecular weight and/or polydispersity index are/is adjusted within the above-described ranges.

**In** the present disclosure, the weight average molecular weight (Mw) may be measured using gel permeation chromatography (GPC). The number average molecular weight (Mn) may also be measured using GPC, and the polydispersity index (PDI) may be calculated by dividing the measured weight average molecular weight (MW) by the number average molecular weight (Mn), that is, MW/Mn. Specifically, the method of measuring the weight average molecular weight and the polydispersity index may be referenced in <Methods of measuring physical properties> below.

**In** the adhesive composition according to an embodiment of the present disclosure, the polyvinylidene fluoride polymer may have a weight average molecular weight (Mw) of 50,000 g/mol or more, 100,000 g/mol or more, 150,000 g/mol or more, 200,000 g/mol or more, 250,000 g/mol or more, 300,000 g/mol or more, 350,000 g/mol or more, or 400,000 g/mol or more, or 10,000,000 g/mol or less, 5,000,000 g/mol or less, 1,000,000 g/mol or less, 900,000 g/mol or less, 800,000 g/mol or less, 700,000 g/mol or less, 600,000 g/mol or less, or 500,000 g/mol or less. The polyvinylidene fluoride polymer may have a weight average molecular weight (MW) within a range set by appropriately selecting the upper and lower limits described above.

**In** the adhesive composition according to an embodiment of the present disclosure, the polyvinylidene fluoride polymer may have a polydispersity index (PDI) of 1 or more, 1.5 or more, 2 or more, 2.5 or more, or 3 or more, or 10 or less, 9 or less, 8 or less, 7 or less, 6 or less, 5 or less, or 4 or less. The polyvinylidene fluoride polymer may have a polydispersity index (PDI) within a range set by appropriately selecting the upper and lower limits described above.

The adhesive composition may have sufficient adhesive strength by including a polyvinylidene fluoride polymer whose weight average molecular weight and/or polydispersity index are/is adjusted within the above-described ranges.

**In** the adhesive composition according to an embodiment of the present disclosure, the resin component includes a polyvinylidene fluoride polymer in an amount of 55 wt% or more, 60 wt% or more, 65 wt% or more, 70 wt% or more, 75 wt% or more, 80 wt% or more, 85 wt% or more, 90 wt% or more, 95 wt% or more, 99 wt% or more, or 100 wt%, based on the total weight of the resin component.

The adhesive composition according to an embodiment of the present disclosure may include a resin component in an amount of 11 wt% or less, 10.9 wt% or less, 10.8 wt% or less, 10.7 wt% or less, 10.6 wt% or less, 10.5 wt% or less, 10.4 wt% or less, 10.3 wt% or less, 10.2 wt% or less, 10.1 wt% or less, 10 wt% or less, 9.9 wt% or less, 9.8 wt% or less, 9.7 wt% or less, 9.6 wt% or less, or 9.5 wt% or less, based on the total weight of the adhesive composition. The adhesive composition may suppress the formation of droplets by including the resin component in an amount of the upper limit described above.

The adhesive composition may include a resin component in an appropriate amount of the lower limit and is not particularly limited. In one example, the adhesive composition may include a resin component in an amount of 8 wt% or more, 8.5 wt% or more, or 9 wt% or more, based on the total weight of the adhesive composition. The adhesive composition may solve the problems of low separator permeability and reduced adhesive strength due to electrolyte decomposition by including the resin component in an amount of the lower limit described above.

The adhesive composition according to an embodiment of the present disclosure may include a resin component within a range set by appropriately selecting the upper and lower limits described above.

**In** the adhesive composition according to the present disclosure, the solvent component includes a first solvent and a second solvent as described above. The distinction between the first solvent and the second solvent may be made by the range of vapor pressure.

**In** the adhesive composition according to an embodiment of the present disclosure, the first solvent may have a vapor pressure (P1) at 20 °C of 100 mmHg or more, 105 mmHg or more, 110 mmHg or more, 115 mmHg or more, 120 mmHg or more, 125 mmHg or more, 130 mmHg or more, 135 mmHg or more, 140 mmHg or more, 145 mmHg or more, 150 mmHg or more, 155 mmHg or more, 160 mmHg or more, 165 mmHg or more, 170 mmHg or more, 175 mmHg or more, or 180 mmHg or more.

The upper limit of the vapor pressure (P1) of the first solvent is not particularly limited as long as the first solvent does not evaporate prematurely and thus the adhesive composition can achieve sufficient adhesive strength. For example, in the adhesive composition, the first solvent may have a vapor pressure (P1) at 20 °C of 700 mmHg or less, 650 mmHg or less, 600 mmHg or less, 550 mmHg or less, 500 mmHg or less, 450 mmHg or less, 400 mmHg or less, 350 mmHg or less, 300 mmHg or less, 250 mmHg or less, or 200 mmHg or less.

The vapor pressure (P1) of the first solvent may be within a range set by appropriately selecting the upper and lower limits described above.

**In** the adhesive composition according to an embodiment of the present disclosure, the second solvent may have a vapor pressure (P2) at 20 °C of 50 mmHg or less, 45 mmHg or less, 40 mmHg or less, 35 mmHg or less, 30 mmHg or less, 25 mmHg or less, or 20 mmHg or less.

The lower limit of the vapor pressure (P2) of the second solvent may be 1 mmHg or more as described above as long as it does not take a long time for the second solvent to evaporate and the adhesive composition can achieve sufficient adhesive strength. For example, in the adhesive composition, the second solvent may have a vapor pressure (P2) of 5 mmHg or more or 10 mmHg or more at 20 °C.

The vapor pressure (P2) of the second solvent may be within a range set by appropriately selecting the upper and lower limits described above.

The adhesive composition according to an embodiment of the present disclosure may solve the problem of reduced adhesive strength due to electrolyte decomposition and have sufficient adhesive strength by including a solvent component, which includes a first solvent and a second solvent having a vapor pressure within the above-described ranges.

**In** the adhesive composition according to an embodiment of the present disclosure, the ratio (P1/P2) of the vapor pressure (P1, units: mmHg) of the first solvent to the vapor pressure (P2, units: mmHg) of the second solvent may be 5 or more, 5.5 or more, 6 or more, 6.5 or more, 7 or more, 7.5 or more, 8 or more, 8.5 or more, 9 or more, 9.5 or more, 10 or more, 10.5 or more, 11 or more, 11.5 or more, or 12 or more, or 50 or less, 45 or less, 40 or less, 35 or less, 30 or less, 25 or less, 20 or less, or 15 or less. The ratio (P1/P2) of the vapor pressure (P1) of the first solvent to the vapor pressure (P2) of the second solvent may be within a range set by appropriately selecting the upper and lower limits described above.

**In** the adhesive composition according to an embodiment of the present disclosure, when the ratio (P1/P2) of the vapor pressure (P1) of the first solvent to the vapor pressure (P2) of the second solvent satisfies the above range, it is possible to solve the problem of the reduced adhesive strength due to electrolyte decomposition and exhibit sufficient adhesive strength.

**In** the adhesive composition according to an embodiment of the present disclosure, the first solvent may have a normal boiling point (PB1) of 100 °C or less, 95 °C or less, 90 °C or less, 85 °C or less, 80 °C or less, 75 °C or less, 70 °C or less, 65 °C or less, or 60 °C or less. The normal boiling point (PB1) of the first solvent is not particularly limited, but may be 30 °C or more, 35 °C or more, 40 °C or more, 45 °C or more, or 50 °C or more. In addition, the normal boiling point (PB1) of the first solvent may be within a range set by appropriately selecting the upper and lower limits described above.

**In** the adhesive composition according to an embodiment of the present disclosure, the second solvent may have a normal boiling point (PB2) of 100 °C or more, 105 °C or more, 110 °C or more, 115 °C or more, 120 °C or more, or 125 °C or more. The normal boiling point (PB2) of the second solvent is not particularly limited but may be 300 °C or less, 290 °C or less, 280 °C or less, 270 °C or less, 260 °C or less, 250 °C or less, 240 °C or less, 230 °C or less, 220 °C or less, 210 °C or less, 200 °C or less, 190 °C or less, 180 °C or less, 170 °C or less, 160 °C or less, or 150 °C or less. The normal boiling point (PB2) of the second solvent may be within a range set by appropriately selecting the upper and lower limits described above.

The term "normal boiling point" used in the present disclosure may refer to the temperature when the external pressure of 101.325 kPa and the vapor pressure of the liquid material become equal. The normal boiling point may be a well-known value, which is presented in the International Chemical Safety Cards (ICSCs). In addition, when it is not widely known, the normal boiling point may be measured according to ASTM D 1120-72 using an ebulliometer.

The adhesive composition according to an embodiment of the present disclosure may solve the problem of reduced adhesive strength due to electrolyte decomposition and exhibit sufficient adhesive strength by including a solvent component including a first solvent and a second solvent which have normal boiling points within each of the above-described ranges.

**In** the adhesive composition according to an embodiment of the present disclosure, the ratio (PB1/PB2) of the normal boiling point (PB1, units: °C) of the first solvent to the normal boiling point (PB2, units: °C) of the second solvent may be 0.01 or more, 0.05 or more, 0.1 or more, 0.15 or more, 0.2 or more, 0.25 or more, 0.3 or more, 0.35 or more, or 0.4 or more, or 0.95 or less, 0.9 or less, 0.85 or less, 0.8 or less, 0.75 or less, 0.7 or less, 0.65 or less, 0.6 or less, 0.55 or less, or 0.5 or less. The ratio (PB1/PB2) of the normal boiling point (PB1) of the first solvent to the normal boiling point (PB2) of the second solvent may be within a range set by appropriately selecting the upper and lower limits described above.

**In** the adhesive composition according to an embodiment of the present disclosure, when the ratio (PB1/PB2) of the normal boiling point (PB1) of the first solvent to the normal boiling point (PB2) of the second solvent satisfies the above range, a reduction in adhesive strength due to electrolyte decomposition may be improved and sufficient adhesive strength may be achieved.

**In** the adhesive composition according to an embodiment of the present disclosure, the first solvent and the resin component may have a solubility parameter within an appropriate range. When the ratio of the solubility parameters of the first solvent and resin component satisfies the range described later, sufficient adhesive strength may be achieved by increasing the solubility of the resin component in the solvent component.

**In** the adhesive composition, the first solvent and the second solvent may have a proportion of solubility parameter within an appropriate range. By adjusting the proportion of solubility parameter within the range described later, the solubility of the resin component in the solvent component increases, and thus sufficient adhesive strength may be achieved.

The term "solubility parameter" used in the present disclosure is a value that numerically expresses the degree of affinity between a solute and a solvent and may be used as an indicator of solubility. The solubility parameter is generally a value obtained by calculating a polar solubility parameter, hydrogen bonding solubility parameter, and dispersion solubility parameter according to specific formulas. The definition of the solubility parameter may be found in the CRC Handbook of Solubility Parameters and Other Cohesion Parameters, 2nd edition (1991) (Non-Patent Document 1). The solubility parameter in the present disclosure may use a known value. When there is no known value, it may be measured according to methods commonly known in the art. When two or more types of substances are mixed, the average value of the molar composition ratio of each substance (can be calculated by high-performance liquid chromatography) may be used as the solubility parameter of the present disclosure. The known solubility parameters for a specific substance may be found in Values selected from Hansen's 1971 parameters listed in the Handbook of Solubility Parameters, Allan F. M. Barton. Ph.D., CRC Press, 1983, pages 153-157 (Non-Patent Document 2). Substances that are not listed in Non-Patent Document 2 may be found in Xiuzhi Tian, and Xue Jiang. Poly(vinylidene fluoride-cohyxafluoropropene (PVDF-HFP) membranes for ethyl acetate removal from water., Journal of Hazardous Materials 153 (2008) 128-135 (Non-Patent Document 3). Substances that are not listed in Non-Patent Document 3 may be found in J. Brandrup, E. H. Immergut, and E.A. Grulke, des. Polymer Handbook, 4th ed., Wiley-Interscience, New York, 1999 (Non-Patent Document 4). Substances that are not listed in Non-Patent Document 4 may be found in Yanlong Luo et al., 2017, J. Phys. Chem. C 2017, 121, 10163-10173 (Non-Patent Document 5). Unless otherwise specified in the present disclosure, the solubility parameter is a value measured under conditions of normal pressure and 25 °C.

**In** the adhesive composition according to an embodiment of the present disclosure, the resin component may have a solubility parameter of 15 (MPa)1/2 or more, 15.5 (MPa)1/2 or more, 16 (MPa)1/2 or more, 16.5 (MPa)1/2 or more, 17 (MPa)1/2 or more, 17.5 (MPa)1/2 or more, 18 (MPa)1/2 or more, 18.5 (MPa)1/2 or more, 19 (MPa)1/2 or more, 19.5 (MPa)1/2 or more, 20 (MPa)1/2 or more, 20.5 (MPa)1/2 or more, 21 (MPa)1/2 or more, 21.5 (MPa)1/2 or more, 22 (MPa)1/2 or more, 22.5 (MPa)1/2 or more, or 23 (MPa)1/2 or more, or 30 (MPa)1/2 or less, 29.5 (MPa)1/2 or less, 29 (MPa)1/2 or less, 28.5 (MPa)1/2 or less, 28 (MPa)1/2 or less, 27.5 (MPa)1/2 or less, 27 (MPa)1/2 or less, 26.5 (MPa)1/2 or less, 26 (MPa)1/2 or less, 25.5 (MPa)1/2 or less, or 25 (MPa)1/2 or less. The solubility parameter of the resin component may be within a range set by appropriately selecting the upper and lower limits described above.

**In** the adhesive composition according to an embodiment of the present disclosure, the first solvent may have a solubility parameter of 10 (MPa)1/2 or more, 10.5 (MPa)1/2 or more, 11 (MPa)1/2 or more, 11.5 (MPa)1/2 or more, 12 (MPa)1/2 or more, 12.5 (MPa)1/2 or more, 13 (MPa)1/2 or more, 13.5 (MPa)1/2 or more, 14 (MPa)1/2 or more, 14.5 (MPa)1/2 or more, 15 (MPa)1/2 or more, 15.5 (MPa)1/2 or more, 16 (MPa)1/2 or more, 16.5 (MPa)1/2 or more, 17 (MPa)1/2 or more, 17.5 (MPa)1/2 or more, 18 (MPa)1/2 or more, 18.5 (MPa)1/2 or more, 19 (MPa)1/2 or more, 19.5 (MPa)1/2 or more, or 20 (MPa)1/2 or more, or 25 (MPa)1/2 or less, 24.5 (MPa)1/2 or less, 24 (MPa)1/2 or less, 23.5 (MPa)1/2 or less, 23 (MPa)1/2 or less, 22.5 (MPa)1/2 or less, 22 (MPa)1/2 or less, 21.5 (MPa)1/2 or less, 21 (MPa)1/2 or less, or 20.5 (MPa)1/2 or less. The solubility parameter of the first solvent may be within a range set by appropriately selecting the upper and lower limits described above.

**In** the adhesive composition according to an embodiment of the present disclosure, the second solvent may have a solubility parameter of 5 (MPa)1/2 or more, 6 (MPa)1/2 or more, 7 (MPa)1/2 or more, 8 (MPa)1/2 or more, 9 (MPa)1/2 or more, 10 (MPa)1/2 or more, 11 (MPa)1/2 or more, 12 (MPa)1/2 or more, 13 (MPa)1/2 or more, 14 (MPa)1/2 or more, 15 (MPa)1/2 or more, 16 (MPa)1/2 or more, or 17 (MPa)1/2 or more, or 30 (MPa)1/2 or less, 29 (MPa)1/2 or less, 28 (MPa)1/2 or less, 27 (MPa)1/2 or less, 26 (MPa)1/2 or less, 25 (MPa)1/2 or less, 24 (MPa)1/2 or less, 23 (MPa)1/2 or less, 22 (MPa)1/2 or less, 21 (MPa)1/2 or less, 20 (MPa)1/2 or less, 19 (MPa)1/2 or less, or 18 (MPa)1/2 or less. The solubility parameter of the second solvent may be within a range set by appropriately selecting the upper and lower limits described above.

**In** the adhesive composition according to an embodiment of the present disclosure, when the resin component, first solvent, and second solvent have a solubility parameter within the above ranges, the solubility of the resin component in the solvent component may be increased, and thus sufficient adhesive strength may be achieved.

**In** the adhesive composition according to an embodiment of the present disclosure, SPR1 according to Equation 2 below may be 0.8 or more, 0.81 or more, 0.82 or more, 0.83 or more, 0.84 or more, 0.85 or more, or 0.86 or more, or 1.2 or less, 1.15 or less, 1.1 or less, 1.05 or less, 1 or less, 0.95 or less, or 0.9 or less. Additionally, SPR1 according to Equation 2 below may be within a range set by appropriately selecting the upper and lower limits described above. [Equation 2] $SPR 1 = SP 1 / SPP$

**In** Equation 2, SP1 is the solubility parameter (units: MPa1/2) at 25 °C for the first solvent, and SPP is the solubility parameter (units: MPa1/2) at 25 °C for the resin component.

**In** the adhesive composition according to an embodiment of the present disclosure, when SPR1 according to Equation 2 satisfies the above range, the solubility of the resin component in the solvent component may be increased, and thus sufficient adhesive strength may be achieved.

**In** the adhesive composition according to an embodiment of the present disclosure, SPR2 according to Equation 3 below may be 0.8 or more, 0.85 or more, 0.9 or more, 0.95 or more, 1 or more, 1.05 or more, or 1.1 or more, or 1.2 or less, 1.19 or less, 1.18 or less, 1.17 or less, 1.16 or less, or 1.15 or less. Additionally, SPR2 according to Equation 3 below may be within a range set by appropriately selecting the upper and lower limits described above. [Equation 3] $SPR 2 = SP 1 / SP 2$

In Equation 3, SP1 is the solubility parameter (units: MPa1/2) at 25 °C for the first solvent, and SP2 is the solubility parameter (units: MPa1/2) at 25 °C for the second solvent.

**In** the adhesive composition according to an embodiment of the present disclosure, when SPR2 according to Equation 3 satisfies the above range, the solubility of the resin component in the solvent component may be increased, and thus sufficient adhesive strength may be achieved.

**In** the adhesive composition according to an embodiment of the present disclosure, SPR1 according to Equation 2 may be equal to or smaller than SPR2 according to Equation 3. In the adhesive composition, SPR1 according to Equation 2 may be preferably smaller than SPR2 according to Equation 3 in order to increase the solubility of the resin component in the solvent component and achieve sufficient adhesive strength.

**In** the adhesive composition according to an embodiment of the present disclosure, the first solvent may include a ketone group in its molecule. By using a compound, which has the above-described physical properties and includes a ketone group in its molecule, as the first solvent and combining it with a second solvent, the solubility of the resin component in the solvent component may be increased, and thus sufficient adhesive strength may be achieved.

**In** the adhesive composition according to an embodiment of the present disclosure, the first solvent may have a chemical formula of RaC(=O)Rb. In the above chemical formula, C(=O) may be a ketone group, and the functional groups, Ra and Rb, are bonded to carbon (C). In the above chemical formula, Ra and Rb may each be independently an alkyl group having 1 to 20, 1 to 16, 1 to 12, 1 to 8, 1 to 4, or 1 to 3 carbon atoms. In the above chemical formula, Ra and Rb may be alkyl groups having the same number of carbon atoms. In addition, in the above chemical formula, Ra and Rb are alkyl groups having the same structure, and the alkyl group may preferably have 1 or 2 carbon atoms. The first solvent may be acetone but is not limited thereto.

**In** the adhesive composition according to an embodiment of the present disclosure, the second solvent may include an ester group its molecule. By using a compound, which has the above-described physical properties and includes an ester group in its molecule, as the second solvent and combining it with the first solvent, the solubility of the resin component in the solvent component may be increased, and thus sufficient adhesive strength may be achieved.

**In** the adhesive composition according to an embodiment of the present disclosure, the second solvent may have a chemical formula of RcC(=O)ORd. In the above chemical formula, C(=O)O may be an ester group, the functional group Rc is bonded to carbon (C), and the functional group Rd is bonded to oxygen (O), which is bonded to carbon through a single bond. In the above chemical formula, Rc and Rd may each independently be an alkyl group having 1 to 20, 1 to 16, 1 to 12, 1 to 8, or 1 to 4 carbon atoms. In the above chemical formula, the number of carbon atoms of Rc may be less than that of Rd. In the above chemical formula, the ratio (Nd/Nc) of the number of carbon atoms of Rd (Nd) to the number of carbon atoms of Rc (NC) may be 10 or less, 9 or less, 8 or less, 7 or less, 6 or less, 5 or less, or 4 or less, or 1 or more, 2 or more, or 3 or more. The ratio (Nd/Nc) preferably ranges from 3 to 5 or from 3.5 to 4.5. The second solvent may be butyl acetate but is not limited thereto.

**In** the adhesive composition according to an embodiment of the present disclosure, the solvent component may include the first solvent in an amount of 60 wt% or more, 62 wt% or more, 64 wt% or more, 66 wt% or more, 68 wt% or more, or 70 wt% or more, or 80 wt% or less, 79 wt% or less, 78 wt% or less, 77 wt% or less, 76 wt% or less, 75 wt% or less, 74 wt% or less, 73 wt% or less, 72 wt% or less, or 71 wt% or less, based on the total weight of the solvent component. The solvent component includes the first solvent within a range set by appropriately selecting the upper and lower limits described above. When the solvent component includes the first solvent within the above range, it is possible to prevent the solvent component from evaporating prematurely.

**In** the adhesive composition according to an embodiment of the present disclosure, the solvent component may include the second solvent in an amount of 25 parts by weight or more, 26 parts by weight or more, 27 parts by weight or more, 28 parts by weight or more, 29 parts by weight or more, 30 parts by weight or more, 31 parts by weight or more, 32 parts by weight or more, 33 parts by weight or more, 34 parts by weight or more, 35 parts by weight or more, 36 parts by weight or more, 37 parts by weight or more, 38 parts by weight or more, 39 parts by weight or more, 40 parts by weight or more, 41 parts by weight or more, or 42 parts by weight or more, or 100 parts by weight or less, 95 parts by weight or less, 90 parts by weight or less, 85 parts by weight or less, 80 parts by weight or less, 75 parts by weight or less, 70 parts by weight or less, 65 parts by weight or less, 60 parts by weight or less, 55 parts by weight or less, or 50 parts by weight or less, based on 100 parts by weight of a first solvent. The solvent component may include the second solvent within a range set by appropriately selecting the upper and lower limits described above. By combining the first solvent and the second solvent within the above ranges, it is possible to prevent the solvent component from evaporating prematurely.

**In** the adhesive composition according to an embodiment of the present disclosure, the solubility of the resin component at 25 °C in 100 g of a mixed solvent, in which the first solvent and the second solvent are mixed at a weight ratio of 5:5, may be 20 g or more, 20.5 g or more, 21 g or more, 21.5 g or more, 22 g or more, 22.5 g or more, 23 g or more, 23.5 g or more, 24 g or more, 24.5 g or more, or 25 g or more, or 100 g or less, 90 g or less, 80 g or less, 70 g or less, 60 g or less, or 50 g or less. The solubility may be within a range set by appropriately selecting the upper and lower limits described above. That is, the solubility of the resin component in 100 g of the mixed solvent prepared by mixing 50 g of the first solvent and 50 g of the second solvent may be within the above range.

The term "mixed solvent" used in the present disclosure may refer to a mixture of solvents consisting of a first solvent and a second solvent. **In** other words, the mixed solvent may include only two solvent components.

The term "solubility" used in the present disclosure may refer to a solubility measured at normal pressure and 25 °C, unless otherwise specified. The solubility may be measured after dissolving the resin component in a mixed solvent to prepare a supersaturated solution and allowing the mixed solvent to evaporate. The solubility may be measured according to the solubility measurement method in <Methods of measuring physical properties> below.

**In** the adhesive composition according to an embodiment of the present disclosure, when the solubility of the resin component is within the above range, it is possible to solve the problem of reduced adhesive strength due to electrolyte decomposition and achieve sufficient adhesive strength.

The adhesive composition according to an embodiment of the present disclosure may solve the problem of reduced adhesive strength due to electrolyte decomposition. The adhesive composition may prevent the problem of reduced adhesive strength after being impregnating with an electrolyte. The adhesive composition may have an AE of 60% or more, 65% or more, 70% or more, 75% or more, 80% or more, 85% or more, or 90% or more according to Equation 1 below. The upper limit of AE according to Equation 1 below is not particularly limited, but may be, for example, 200% or less, 190% or less, 180% or less, 170% or less, 160% or less, or 150% or less. The adhesive composition may have AE according to Equation 1 below within a range set by appropriately selecting the upper and lower limits described above. [Equation 1] $AE = Af / AiX 100 \left(%\right)$

**In** Equation 1, Ai is the peel strength measured at 25 °C after applying the adhesive composition to a polyethylene terephthalate (PET) film, drying it until all solvent components evaporate, attaching an exposed side of the dried adhesive composition to a metal plate, and peeling the PET film at a peeling angle of 90 degrees and a peeling speed of 300 mm/min.

Af is the peel strength measured at 25 °C after applying the adhesive composition to a polyethylene terephthalate (PET) film, drying it until all solvent components evaporate, impregnating it with an electrolyte including a carbonate solvent for 20 seconds, drying it until all of the electrolyte evaporates, attaching an exposed side of the dried adhesive composition to a metal plate, and peeling the PET film at a peeling angle of 90 degrees and a peeling speed of 300 mm/min.

The term "drying" used in the present disclosure refers to a state in which no solvent component is substantially included, such as a state in which the solvent component is included in an amount of about 1 wt% or less, 0.5 wt% or less, 0.1 wt% or less, or 0.05 wt% or less. The drying condition for the above state is not particularly limited and may be adjusted to the above-described amount in an appropriate manner.

**In** the adhesive composition according to an embodiment of the present disclosure, Af in Equation 1 may be 0.1 N/mm or more, 0.11 N/mm or more, or 0.12 N/mm or more. The upper limit of Af is not particularly limited but may be 0.5 N/mm or less or 0.4 N/mm or less.

The contact angle of the adhesive composition according to an embodiment of the present disclosure for the PET film at 25 °C may be 40 degrees or less, 38 degrees or less, 36 degrees or less, 34 degrees or less, 32 degrees or less, 30 degrees or less, 28 degrees or less, 26 degrees or less, 24 degrees or less, 22 degrees or less, 20 degrees or less, 18 degrees or less, 16 degrees or less, 14 degrees or less, or 12 degrees or less. The contact angle of the adhesive composition is not limited but may be 5 degrees or more, 6 degrees or more, 7 degrees or more, 8 degrees or more, 9 degrees or more, or 10 degrees or more. The contact angle of the adhesive composition may be within a range set by appropriately selecting the upper and lower limits described above.

The contact angle of the first solvent according to an embodiment of the present disclosure for the PET film at 25 °C may be 30 degrees or more, 31 degrees or more, 32 degrees or more, 33 degrees or more, 34 degrees or more, or 35 degrees or more, or 42 degrees or less, 41 degrees or less, 40 degrees or less, or 39 degrees or less. The contact angle of the first solvent may be within a range set by appropriately selecting the upper and lower limits described above.

The contact angle of the adhesive composition according to an embodiment of the present disclosure for the PET film at 25 °C may be smaller than the contact angle of the first solvent for the PET film at 25 °C. By adjusting the contact angle of the adhesive composition to be smaller than the contact angle of the first solvent, the formation of droplets may be suppressed.

A battery cell according to an embodiment of the present disclosure may include an electrode assembly and an electrolyte. The battery cell may include the electrode assembly accommodated in an exterior material, and the interior space surrounded by the exterior material may be filled with the electrolyte.

The electrode assembly may include a positive electrode, a negative electrode, and a separator. The separator may be interposed between the positive electrode and the negative electrode. In other words, the battery cell may include an electrode assembly including a positive electrode, a negative electrode, and a separator interposed between the positive electrode and the negative electrode. The positive electrode (cathode) is a reduction electrode through which an electron transfer material receives electrons when the battery cell is discharged. The negative electrode (anode) is an oxidation electrode through which an electron transfer material transfers electrons when the battery cell is discharged.

**In** the above, it is classified into various types of battery depending on the type of electron transfer material. For example, when the electron transfer material is lithium (including lithium ions), the battery is called a lithium-ion battery.

The exterior material may protect the electrode assembly from external impacts and prevent the electrolyte from leaking out. Depending on the shape of the exterior material, battery cells may be classified as prismatic, cylindrical, or pouch-shaped.

The electrode assembly may be finished with a finishing material. The electrode assembly may be formed by preparing a separator, a positive electrode, a separator, and a negative electrode in a long sheet and winding them. The electrode assembly formed in this manner is called a jelly roll. The method of forming a jelly roll may be used without any limitation as long as it is used in the art. For example, reference may be made to Patent Document 3.

The electrode assembly may have an adhesive formed from the adhesive composition according to an embodiment of the present disclosure on at least a portion of the finishing material and may be finished with the adhesive. In the present disclosure, the adhesive may be formed by drying the adhesive composition according to an embodiment of the present disclosure. Drying may be accomplished by leaving the adhesive composition at room temperature or higher. After all solvents components evaporate through drying, the adhesive composition may be formed into an adhesive with an adhesive component.

The finishing material according to an embodiment of the present disclosure may be at least a portion of a separator of the electrode assembly. In addition, at least a portion of each of the finishing material and electrode assembly is bonded with the adhesive.

**In** the battery cell according to an embodiment of the present disclosure, a positive electrode of an electrode assembly may include a positive electrode current collector and a positive electrode active material layer. The positive electrode active material layer may be located on at least one side of the positive electrode current collector.

The type, size, and shape of the positive electrode current collector are not particularly limited as long as it has conductivity without causing chemical changes in the battery cell. The positive electrode current collector may be, for example, stainless steel, aluminum, nickel, titanium, calcined carbon, or aluminum or stainless steel whose surface is treated with carbon, nickel, titanium, or silver.

The positive electrode current collector may have an appropriate thickness as necessary. Although it is not particularly limited, the positive electrode current collector may have a thickness in a range of 1 µm to 500 µm, 1 µm to 300 µm, 1 µm to 100 µm, or 1 µm to 50 µm.

Unless otherwise specified, the terms "thickness (or height)," "width," and "length" used in the present disclosure refer to average values, and the thickness (or height), width, and length may be measured according to the methods known in the art using any instrument capable of measuring them.

The positive electrode current collector may have fine irregularities formed on its surface to further enhance the adhesive strength with the positive electrode active material layer. For example, the form of the positive electrode current collector may be one or more selected from the group consisting of films, sheets, foils, nets, porous materials, foams, and non-woven materials.

The positive electrode active material layer may be formed of a positive electrode slurry composition. Specifically, the positive electrode active material layer is a dried form of the positive electrode slurry composition and may be rolled, if necessary, after drying.

The positive electrode active material layer may be formed by applying the positive electrode slurry composition on at least one side of the positive electrode current collector and drying it. In addition, as described above, if necessary, rolling after drying may be performed. The rolling may be performed using a rolling jig according to a known method in the art. The method of applying the positive electrode slurry composition is not particularly limited, and any known method may be used. Specifically, the method of applying it may be a doctor blade method, a dip method, a reverse roll method, a direct roll method, a gravure method, an extrusion method, or a brush application method. Considering the thickness after drying, the positive electrode slurry composition may be applied to an appropriate thickness, and the application method may be appropriately selected from the known methods described above, depending on the thickness applied.

The positive electrode slurry composition forming the positive electrode active material layer may include various components. The positive electrode slurry composition may be in a state in which the various components are appropriately dispersed. The positive electrode slurry composition may be prepared by adding the various components in an appropriate method and order and mixing them. The mixing method is not particularly limited and known methods may be used. Specifically, the mixing method may use a ball mill, a sand mill, a bead mill, a pigment disperser, an ultrasonic disperser, a homogenizer, a planetary mixer, or a FilMix mixer.

The positive electrode active material layer may be in direct contact with the positive electrode current collector or located on the positive electrode current collector without direct contact. For example, an additional layer may be interposed between the positive electrode current collector and the positive electrode active material layer. In addition, the positive electrode active material layer may have a single-layer structure or a multi-layer structure.

The positive electrode active material layer may include a positive electrode active material. The positive electrode active material is not particularly limited, but may be, for example, layered compounds such as lithium cobalt oxide (LiCoO2) and lithium nickel oxide (LiNiO2) or compounds substituted with one or more transition metals; lithium iron oxide such as LiFe3O4; lithium manganese oxide such as a chemical formula of Li1+c1Mn2-c1O4 (0≤c1≤0.33), LiMnO3, LiMn2O3, or LiMnO2; lithium copper oxide (Li2CuO2); vanadium oxides such as LiV3O8, V2O5, or Cu2V2O7; Ni-site lithium nickel oxide represented by a chemical formula of LiNi1-c2Mc2O2 (where M is at least one selected from the group consisting of Co, Mn, Al, Cu, Fe, Mg, B, and Ga and satisfies 0.01≤c2≤0.3); lithium manganese composite oxide represented by a chemical formula of LiMn2-c3Mc3O2 (where, M is at least one selected from the group consisting of Co, Ni, Fe, Cr, Zn, and Ta and satisfies 0.01≤c3≤0.1) or Li2Mn3MO8 (where M is at least one selected from the group consisting of Fe, Co, Ni, Cu, and Zn); and lithium nickel cobalt manganese (NCM) composite oxide, lithium nickel cobalt manganese aluminum (NCMA) composite oxide, and LiMn2O4 in which some Li of the chemical formula is substituted with an alkaline earth metal ion.

The positive electrode active material layer may include a binder. The type of binder is not particularly limited, and a material, which serves to improve adhesion between positive electrode active materials and the adhesive strength between the positive electrode active material layer and the positive electrode current collector, may be used.

The type of binder is not particularly limited. For example, one or more selected from the group consisting of polyvinylidene fluoride (PVDF), polyvinyl alcohol, styrene butadiene rubber (SBR), polyethylene oxide, carboxyl methyl cellulose (CMC), cellulose acetate, cellulose acetate butyrate, cellulose acetate propionate, cyanoethylpullulan, cyanoethyl polyvinyl alcohol, cyanoethyl cellulose, cyanoethyl sucrose, pullulan, polymethylmethacrylate, polybutylacrylate, polyacrylonitrile, polyvinylpyrrolidone, polyvinylacetate, polyethylene-co-vinyl acetate, and polyarylate may be used.

The positive electrode active material layer may further include a conductive material. The conductive material is not particularly limited as long as it has conductivity without causing chemical changes in battery cells. For example, as a conductive material, graphite including natural graphite or artificial graphite; carbon black including acetylene black, ketjen black, channel black, furnace black, lamp black, and thermal black; conductive fibers including carbon fiber and metal fiber; conductive tubes including carbon nanotubes (CNTs); fluorocarbon; metal powders including aluminum and nickel powders; conductive whiskers including zinc oxide and potassium titanate; conductive metal oxides including titanium oxide; and conductive materials including polyphenylene derivatives may be used.

The positive electrode slurry composition forming the positive electrode active material layer may include the above-described positive electrode active material and binder, and, if necessary, further include a conductive material. The positive electrode slurry composition may further include a solvent. The solvent may be appropriately determined in consideration of the desired performance and may be an aqueous solvent such as water (pure water or ultrapure water), an organic solvent, or a mixed solvent of two or more types. For example, the solvent may be an organic solvent, such as N-methyl-2-pyrrolidone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethyl sulfoxide, formamide, dimethylformamide, acetonitrile, nitromethane, methyl formate, methyl acetate, triester phosphate, trimethoxy methane, sulfolane, methyl sulfolane, 1,3-dimethyl-2-imidazolidinone, propylene carbonate derivatives, tetrahydrofuran derivatives, methyl propionate, alcohol, or ethyl propionate, or an aqueous solvent such as water. The solvent content may be selected in consideration of the desired performance of the battery cell.

The content ratio of the conductive material and solvent, as well as the active material and binder, may be appropriately adjusted in order to achieve the purpose of the positive electrode slurry composition forming the positive electrode active material layer. A content ratio known in the art may be applied.

**In** the battery cell according to an embodiment of the present disclosure, a negative electrode of an electrode assembly may include a negative electrode current collector and a negative electrode active material layer. The negative electrode active material layer may be disposed at least one side of the negative electrode current collector.

The type, size, and shape of the negative electrode current collector are not particularly limited as long as it has conductivity without causing chemical changes in the battery cell. For example, copper, stainless steel, nickel, titanium, calcined carbon, copper or stainless steel whose surface is treated with carbon, nickel, titanium, or silver, or aluminum-cadmium alloys may be used.

The negative electrode current collector may have an appropriate thickness as necessary. Although it is not particularly limited, the negative electrode current collector may have a thickness in a range of 1 µm to 500 µm, 1 µm to 300 µm, 1 µm to 100 µm, or 1 µm to 50 µm.

The negative electrode current collector may have fine irregularities formed on its surface to further enhance the adhesive strength with the negative electrode active material layer. For example, the form of the negative electrode current collector may be one or more selected from the group consisting of films, sheets, foils, nets, porous materials, foams, and non-woven materials.

The negative electrode active material layer may be formed by applying a negative electrode slurry composition to at least one side of the negative electrode current collector and drying it. In addition, as described above, if necessary, rolling after drying may be performed. Considering the thickness after drying, the negative electrode slurry composition may be applied to an appropriate thickness, and the application method may be appropriately selected from the known methods described above, depending on the thickness applied.

The negative electrode slurry composition forming the negative electrode active material layer may include various components. The negative electrode slurry composition may be in a state in which the various components are appropriately dispersed. The negative electrode slurry composition may be prepared by adding the various components in an appropriate method and order and mixing them. The mixing method is not particularly limited and known methods may be used. Specifically, the mixing method may use a ball mill, a sand mill, a bead mill, a pigment disperser, an ultrasonic disperser, a homogenizer, a planetary mixer, or a FilMix mixer.

The negative electrode active material layer may be in direct contact with the negative electrode current collector or located on the negative electrode current collector without direct contact. For example, an additional layer may be interposed between the negative electrode current collector and the negative electrode active material layer. In addition, the negative electrode active material layer may have a single-layer structure or a multi-layer structure.

The negative electrode active material layer may include a negative electrode active material. The negative electrode active material is not particularly limited, but may be, for example, a compound capable of reversible intercalation and deintercalation of lithium. Specific examples include carbonaceous materials such as graphite (artificial graphite, natural graphite, or graphitized carbon fiber) or amorphous carbon; metallic compounds that can be alloyed with lithium such as Si, Al, Sn, Pb, Zn, Bi, In, Mg, Ga, Cd, Si alloy, Sn alloy, or Al alloy; metal oxides that can dope and dedope lithium such as SiOβ (0<β≤2), SnO2, vanadium oxide, and lithium vanadium oxide; or a composite including the above metallic compound and carbonaceous material such as a Si-C composite or Sn-C composite may be used, and any one or a mixture of two or more thereof may be used. A thin film of metallic lithium may be used as the negative electrode active material. Carbon materials such as low crystalline carbon and high crystalline carbon may be used. The low crystalline carbon may include soft carbon and hard carbon. The high crystalline carbon may be amorphous, plate-shaped, flaky, spherical or fibrous natural graphite or artificial graphite, Kish graphite, pyrolytic carbon, mesophase pitch based carbon fiber, mesocarbon microbeads, and high-temperature calcined carbon such as mesophase pitches and petroleum or coal tar pitch derived cokes.

The negative electrode active material layer may include a binder. The type of binder is not particularly limited, and a material, which serves to improve adhesion between negative electrode active materials and the adhesive strength between the negative electrode active material layer and negative electrode current collector, may be used.

The type of binder is not particularly limited. For example, one or more selected from the group consisting of polyvinylidene fluoride (PVDF), polyvinyl alcohol, styrene butadiene rubber (SBR), polyethylene oxide, carboxyl methyl cellulose (CMC), cellulose acetate, cellulose acetate butyrate, cellulose acetate propionate, cyanoethylpullulan, cyanoethyl polyvinyl alcohol, cyanoethyl cellulose, cyanoethyl sucrose, pullulan, polymethylmethacrylate, polybutylacrylate, polyacrylonitrile, polyvinylpyrrolidone, polyvinylacetate, polyethylene-co-vinyl acetate, and polyarylate may be used.

The negative electrode active material layer may further include a conductive material. The conductive material is not particularly limited as long as it has conductivity without causing chemical changes in battery cells. For example, as a conductive material, graphite including natural graphite or artificial graphite; carbon black including acetylene black, ketjen black, channel black, furnace black, lamp black, and thermal black; conductive fibers including carbon fiber and metal fiber; conductive tubes including carbon nanotubes (CNTs); fluorocarbon; metal powders including aluminum and nickel powders; conductive whiskers including zinc oxide and potassium titanate; conductive metal oxides including titanium oxide; and conductive materials including polyphenylene derivatives may be used.

The negative electrode slurry composition forming the negative electrode active material layer may include the above-described negative electrode active material and binder, and, if necessary, further include a conductive material. The negative electrode slurry composition may further include a solvent. The solvent may be appropriately determined in consideration of the desired performance and may be an aqueous solvent such as water (pure water or ultrapure water), an organic solvent, or a mixed solvent of two or more types. For example, the solvent may be an organic solvent, such as N-methyl-2-pyrrolidone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethyl sulfoxide, formamide, dimethylformamide, acetonitrile, nitromethane, methyl formate, methyl acetate, triester phosphate, trimethoxy methane, sulfolane, methyl sulfolane, 1,3-dimethyl-2-imidazolidinone, propylene carbonate derivatives, tetrahydrofuran derivatives, methyl propionate, alcohol, or ethyl propionate, or an aqueous solvent such as water. The solvent content may be selected in consideration of the desired performance of the battery cell.

The content ratio of the conductive material and solvent, as well as the active material and binder, may be appropriately adjusted in order to achieve the purpose of the negative electrode slurry composition forming the negative electrode active material layer. A content ratio known in the art may be applied.

If necessary, each active material layer of the positive electrode and the negative electrode may independently further include a thickener, a reinforcing material, a leveling agent, or an electrolyte additive. The types of the thickener, reinforcing material, leveling agent, or electrolyte additive are not particularly limited as long as they are used in the art.

Each slurry composition forming the active material layers of the positive electrode and the negative electrode may include all the components included in the above-described active material layers.

**In** the battery cell according to an embodiment of the present disclosure, the separator of the electrode assembly is a membrane through which an electron transfer material passes while preventing electrical short circuits between the positive electrode and the negative electrode. The separator may be used without particular limitation as long as it is commonly used in the art. In particular, the separator may preferably have low resistance to ion movement in the electrolyte and have an excellent electrolyte impregnation ability (wettability). Specifically, porous polymer films may be used, and for example, porous polymer films prepared by polyolefin-based polymers such as an ethylene polymer, propylene polymer, ethylene/butene copolymer, ethylene/hexene copolymer, and ethylene/methacrylate copolymer, and the like or a laminated structure of two or more thereof may be used. In addition, commonly used porous non-woven materials such as non-woven materials made of high melting point glass fibers and polyethylene terephthalate fibers, and the like may be used. In order to ensure heat resistance or mechanical strength, a coated separator containing ceramic components or polymers may be used, and optionally a single-layer or multi-layer structure may be used.

**In** the battery cell according to an embodiment of the present disclosure, the electrolyte is a medium that causes the movement of electron transfer materials to easily carry out the electrochemical reaction between the positive electrode and the negative electrode. The electrolyte may be an organic liquid electrolyte, an inorganic liquid electrolyte, a gel-type polymer electrolyte or a molten-type inorganic electrolyte, which is commonly used but is not limited thereto. Instead of the electrolyte, a solid electrolyte such as a gel-type polymer electrolyte may also be used. Batteries using solid electrolytes are generally called a solid-state battery or an all-solid-state battery. Liquid electrolytes generally include an organic solvent and a lithium salt.

The organic solvent may be used without particular limitation as long as it can serve as a medium through which ions involved in the electrochemical reaction of the battery cell can move. Specifically, the organic solvent may be ester solvents such as methyl acetate, ethyl acetate, γ-butyrolactone, and ε-caprolactone; ether solvents such as dibutyl ether or tetrahydrofuran; ketone solvents such as cyclohexanone; aromatic hydrocarbon solvents such as benzene and fluorobenzene; carbonate solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol solvents such as ethyl alcohol and isopropyl alcohol; nitrile solvents such as R-CN (where R is a straight-chain, branched or ring-structured hydrocarbon group having 2 to 20 carbon atoms and may include a double bond aromatic ring or an ether bond); amide solvents such as dimethylformamide; dioxolane solvents such as 1,3-dioxolane; or a sulfolane solvent. The hydrocarbon group may be one or more selected from the group consisting of an alkyl group, an alkenyl group, and an alkynyl group. It is preferable for the organic solvent to include a carbonate solvent. A mixture of a cyclic carbonate solvent (such as ethylene carbonate or propylene carbonate), which has high ionic conductivity and a high dielectric constant that may improve the charge/discharge performance of the battery cell, and a low-viscosity linear carbonate solvent (such as ethyl methyl carbonate, dimethyl carbonate, or diethyl carbonate) may be preferred. The performance of the electrolyte may be excellent when the cyclic carbonate and the chain carbonate are mixed in a volume ratio of about 1:1 to about 1:9.

The lithium salt may be used without particular limitation as long as it a compound that can provide lithium ions. Specifically, the lithium salt may be LiPF6, LiClO4, LiAsF6, LiBF4, LiSbF6, LiAl04, LiAlCl4, LiCF3SO3, LiC4F9SO3, LiN(C2F5SO3)2, LiN(C2F5SO2)2, LiN(CF3SO2)2. LiCl, LiI, or LiB(C2O4)2. The concentration of the lithium salt is preferably within the range of 0.1 or 5.0 M or 0.5 to 2 M. When the lithium salt concentration is within the above range, since the electrolyte has appropriate conductivity and viscosity, it exhibits excellent electrolyte performance and allows lithium ions to effectively move.

**In** addition to the above electrolyte components, the electrolyte may further include one or more additives such as haloalkylene carbonate compounds such as difluoroethylene carbonate, pyridine, triethyl phosphite, triethanolamine, cyclic ether, ethylene diamine, n-glyme, hexamethyl phosphoric triamide, a nitrobenzene derivative, sulfur, quinone imine dye, N-substituted oxazolidinone, N,N-substituted imidazoly, ethylene glycol dialkyl ether, an ammonium salt, pyrrole, 2-methoxyethanol, or aluminum trichloride for various purposes such as improving battery lifetime characteristics, suppressing a reduction in battery capacity, and enhancing battery discharge capacity.

An assembly of one or more electrically connected battery cells may be referred to as a battery cell assembly. The battery cell assembly may be, for example, a battery module and a battery pack.

The term "electrically connected" used in the present disclosure, may refer to a state in which an electrical circuit is formed when objects are connected by a connection method so that current can flow to each of the connected objects. The connection method is not particularly limited as long as electrical connection is possible, but the connection method may be to connect the objects directly or may be a wire through which current can flow.

The battery cell assembly according to an embodiment of the present disclosure may include one or more battery cells, and the battery cell may be the battery cell according to an embodiment of the present disclosure described above.

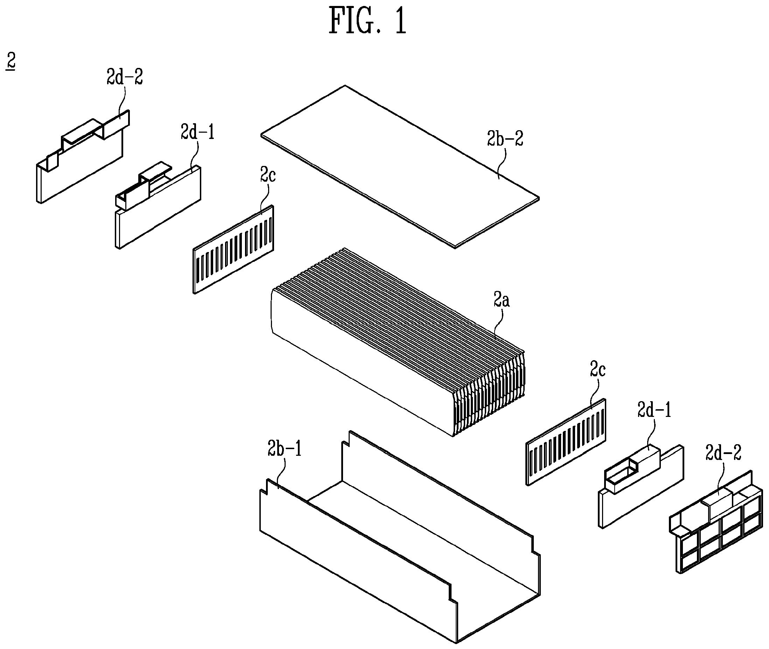

A structure in which battery cells are grouped in a certain number and placed in a housing to protect them from external impacts, heat, and vibrations, is called a battery module. Patent Document 1 discloses an example of a battery module. FIG. 1 is a view briefly illustrating an exemplary structure of a battery module 2 according to an embodiment of the present disclosure. Referring to FIG. 1, the battery module 2 includes a battery cell unit 2a, lower and upper housings 2b-1 and 2b-2, a busbar 2c, and inner and outer covers 2d-1 and 2d-2.

The battery cell unit 2a includes one or more battery cells, and when there are a plurality of battery cells, battery cells may be connected in series and/or in parallel. The battery cell unit 2a may be accommodated in the space between the lower housing 2b-1 and the upper housing 2b-2. The method of accommodating the battery cell unit 2a is not limited by FIG. 1.

Meanwhile the battery cell includes a positive electrode tab extending from the positive electrode and a negative electrode tab extending from the negative electrode. The battery cell unit 2a has a structure in which positive electrode tabs and negative electrode tabs corresponding to the number of battery cells in the battery cell unit protrude. The positive electrode tab and the negative electrode tab may each be electrically coupled to the busbar 2c having a slit. The positive electrode tab and the negative electrode tab may each be electrically coupled to the busbar 2c by being inserted into the slit of the busbar 2c. In addition, the battery module 2 includes the inner and outer covers 2d-1 and 2d-2 to cover the busbar 2c and the battery cell unit 2a.

A structure in which the battery module 2 is equipped with various control devices and protection systems, such as a battery management system (BMS) and a cooling device, is called a battery pack. Patent Document 2 discloses an example of a battery pack. However, recently, there are cases where a battery pack is composed of battery cells instead of the battery module 2, which are called cell-to-pack.

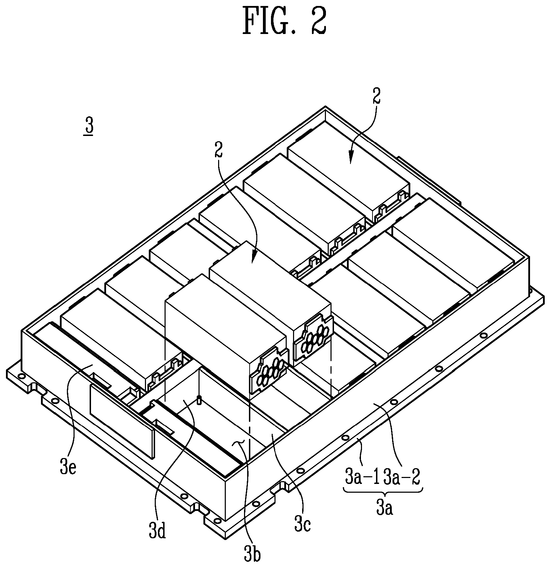

FIG. 2 is a view of briefly illustrating an exemplary structure of a battery pack 3 according to an embodiment of the present disclosure. Referring FIG. 2, the battery pack 3 accommodates one or more battery modules 2 and electrical component 3e such as various control devices such as a BMS inside a pack housing 3a.

**In** order to secure the structural rigidity of the pack housing 3a, the battery pack 3 may include a cross member 3d, which protrudes from a bottom portion 3a-1 of the pack housing 3a while crossing the bottom portion 3a-1 to connect opposing sidewalls 3a-2 of the pack housing 3a, and a partition 3c, which protrudes from the bottom portion 3a-1 of the pack housing 3a and connects the cross member 3d and the sidewall 3a-2.

An electrical device according to an embodiment of the present disclosure may include one or more selected from the group consisting of a battery cell and one or more battery cell assemblies according to an embodiment of the present disclosure. The electrical device is a device that operates by power generated from a battery cell and may be, for example, mobile phones, home appliances, electric vehicles, hybrid vehicles, or an energy storage system (ESS).

### <Methods of measuring physical properties>

The physical properties mentioned in the present disclosure may be measured as follows, and the physical properties in Examples and Comparative Examples below were measured as follows.

### 1. Weight average molecular weight and polydispersity index

The weight average molecular weight (Mw) was measured using gel permeation chromatography (GPC). Specifically, the weight average molecular weight (Mw) may be measured by putting a sample to be analyzed in a 5 mL vial and diluting it with a tetrahydrofuran (THF) solvent to a concentration of about 1 mg/mL and then filtering a standard sample for calibration and a sample for analysis through a syringe filter (pore size: 0.45 µm). ChemStation commercially available from Agilent Technologies, Inc. was used as an analysis program, and the weight average molecular weight (Mw) may be obtained by comparing the elution time of the sample with the calibration curve. The number average molecular weight (Mn) may be measured in the same manner, and the polydispersity index (PDI) is a value (MW/Mn) calculated by dividing the measured weight average molecular weight (MW) by the number average molecular weight (Mn).

### <GPC measurement conditions>

Instrument: 1200 series from Agilent Technologies, Inc.
Column: TL Mix. A & B from Agilent Technologies, Inc.
Solvent: tetrahydrofuran (THF)
Column temperature: 35 °C
Sample concentration: 1 mg/mL, 200 µL injection
Standard sample: polystyrene (MP: 3900000, 723000, 316500, 52200, 31400, 7200, 3940, 485)

### 2. Solubility

Solubility may be used to indicate how well a solute dissolves in a solvent. The solubility may be represented by S according to the solubility formula below and measured at 25 °C and normal pressure. Specifically, the solubility may be measured by the series of steps below. In a specific example, a solvent may be a solvent component according to an embodiment of the present disclosure, and a solute may be a resin component according to an embodiment of the present disclosure.
1) Pour about 80 mL of solvent into a beaker, add an excess amount of solute to the beaker so that the solute is saturated or supersaturated, and stir for a sufficient time in a constant temperature bath at 25 °C.
2) After quantifying about 10 mL of the dissolved portion (saturated solution) with a pipette, put it into an evaporation container whose weight (m0) is known in advance and measure the weight (m1).
3) After allowing all the solvent of the saturated solution in the evaporation container to evaporate, measure the weight (m2).
4) Calculate solubility S according to the solubility formula below.
[Solubility formula] $S = 100 X \left(m2-m0\right) / \left\{\left(m1-m0\right)-\left(m2-m0\right)\right\}$

**In** the solubility formula, m0 is the weight of the evaporation container, m1 is the combined weight of the evaporation container and the saturated solution (which is the weight measured in the above step 2 by adding the saturated solution to the evaporation container), and m2 is the combined weight of the evaporation container and the solute remaining after allowing all the solvent (which is the weight measured in the above step 3 after allowing all the solvent of the saturated solution in the evaporation container to evaporate) to evaporate. In the solubility formula, m0, m1, and m2 may all be in units of g.

### 3. Evaporation time

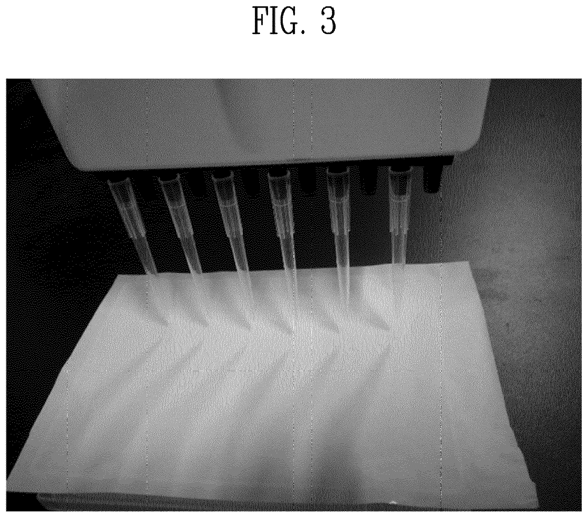

After dropping 0.1 mL of the adhesive composition in a multi-channel pipette on six points at regular intervals on one surface of a polyethylene (PE) separator, the time taken for all of the adhesive composition dropped at the six points to evaporate at 25 °C was measured. FIG. 3 shows a method of measuring the evaporation time. Referring to FIG. 3, it can be seen that the evaporation time is measured after dropping the adhesive composition in the multi-channel pipette on six points at regular intervals on one surface of a separator.

### 4. Contact angle

The static contact angle was measured at 25 °C according to ASTM D 5946 after dropping a liquid object to be analyzed on one side of a polyethylene terephthalate (PET) film.

### 5. Adhesive strength

The adhesive strength before being impregnated with an electrolyte was the peel strength measured at 25 °C after applying the adhesive composition to a polyethylene terephthalate (PET) film, drying it until all the solvent components evaporated, attaching an exposed side of the dried adhesive composition to a metal plate, and peeling the PET film at a peeling angle of 90 degrees and a peeling speed of 300 mm/min.

The adhesive strength after being impregnated with an electrolyte was the peel strength measured at 25 °C after applying the adhesive composition to a polyethylene terephthalate (PET) film, drying it until all the solvent components evaporated, impregnating it with an electrolyte including a carbonate solvent for 20 seconds, drying it until all of the electrolyte evaporated, attaching an exposed side of the dried adhesive composition to a metal plate, and peeling the PET film at a peeling angle of 90 degrees and a peeling speed of 300 mm/min. The impregnation was performed at about 25 °C.

The electrolyte was prepared by dissolving 1 M LiPF6 in a mixed solvent including ethylene carbonate (EC), ethyl methyl carbonate (EMC), and diethyl carbonate (DEC) in a volume ratio of 25:45:30 (EC:EMC:DEC).

### 6. Separator permeability

After four separators made of polyethylene (PE) and polypropylene (PP) with a thickness of about 10 µm to 20 µm were overlapped, an adhesive composition was applied to one side of the outermost separator. After naturally drying the adhesive composition at about 25 °C, the opposite side facing the application area was checked to confirm how much the adhesive composition was permeated into the separator. The total number of separators with traces of adhesive composition penetration was counted. It was evaluated as PASS when there was no separator with traces of penetration, and it was evaluated as NG when there was at least one separator with traces of penetration.

### 7. Viscosity

Viscosity was measured using a viscosity meter (manufacturer: AMETEK Brookfield, model: Brookfield LV) and an LV-63 spindle. After performing adjusting zero-point adjustment of the viscometer, the spindle, LV-63, was mounted on the spindle connection part of the viscometer.

After filling a container with an appropriate amount of the object to be measured, the spindle was placed in the center of the filled object. The spindle was rotated at a rotation speed of about 100 rpm to measure the viscosity at 25 °C.

### 8. Viscosity change over time

The viscosity change over time of the adhesive composition may be measured by a viscosity change rate when left at room temperature for about 7 days. The viscosity change over time may be specifically evaluated by VR according to [Evaluation method of viscosity change over time].

### [Evaluation method of viscosity change over time]

$VR = \left|Vf-Vi\right| / Vi X 100 \left(%\right)$

Vi is the viscosity of the adhesive composition measured according to the viscosity measurement method and specifically the viscosity of the adhesive composition before being left for 7 days. Vf is the viscosity of the adhesive composition measured according to the viscosity measurement method after measuring Vi and being left for 7 days at 25 °C. Here, one day means 24 hours, and 7 days means 168 hours.

When VR is more than 10%, it may be evaluated that there is a viscosity change over time. When VR is 10% or less, it may be evaluated that there is no viscosity change over time.

The well-known vapor pressure (20 °C) and solubility parameters of solvents used in Preparation Examples and Comparative Examples below are shown in Table 1. The vapour pressure in Pascal can be obtained by multiplying the mmHg value with 133.3. The solubility parameters of the polyvinylidene fluoride-hexafluoropropylene copolymer (PVDF-HFP) are shown in Table 1 below. The solubility parameters in Table 1 are values at 25 °C.

**[Table 1]**

| Material | Vapor pressure (mmHg) | Solubility parameter (MPa1/2) | Material | Vapor pressure (mmHg) | Solubility parameter (MPa1/2) |
|---|---|---|---|---|---|
| Acetone | 184 | 20 | Acetonitrile | 72.8 | 24.3 |
| Butyl acetate | 13 | 17.4 | Propylene carbonate | 0.13 | 27.3 |
| Methyl isobutyl ketone | 15.8 | 17 | Methyl n-propyl ketone | 12 | 18.5 |
| PVDF-HFP | - | 23.2 | - | - | - |

Mixed solvents were prepared according to Table 2 below. The solubility of the polyvinylidene fluoride-hexafluoropropylene copolymer (PVDF-HFP) for each mixed solvent is shown in Table 2 below. The weight average molecular weight of the PVDF-HFP is about 400,000 g/mol, and the polydispersity index (PDI) is about 3.3. The used PVDF-HFP is as follows.

**[Table 2]**

| Classification | Mixed solvent (by weight) | Solubility (g) |
|---|---|---|
| Preparation Example 1 | Acetone:butyl acetate=5:5 | 22.9 |
| Comparative Preparation Example 1 | Acetone:methyl isobutyl ketone=5:5 | 10.9 |
| Comparative Preparation Example 2 | Acetone:methyl n-propyl ketone=5:5 | 10.9 |
| Comparative Preparation Example 3 | Acetone: propylene carbonate=5:5 | 8.8 |

Referring to Table 2, Preparation Example 1 was combined to meet the definition of the first and second solvents in the present disclosure, and it can be seen that the solubility of the polyvinylidene fluoride-hexafluoropropylene copolymer (PVDF-HFP) in 100 g of the mixed solvent was greater than 20 g. Referring to Table 2, Comparative Preparation Examples 1 to 3 were combined to meet the definition of the first and second solvents in the present disclosure, but it can be seen that the solubility of the polyvinylidene fluoride-hexafluoropropylene copolymer (PVDF-HFP) in 100 g of the mixed solvent was 20 g or less. Therefore, the adhesive strength of Comparative Preparation Examples 1 to 3 may be reduced due to electrolyte decomposition, resulting in insufficient adhesive strength.

Adhesive compositions were prepared according to Table 3 below. The adhesive compositions according to Table 3 below were prepared by dissolving the polyvinylidene fluoride-hexafluoropropylene copolymer (PVDF-HFP) in a solvent component. The concentration of PVDF-HFP is the weight of PVDF-HFP relative to the total weight of the adhesive composition and is shown in Table 3 below. The numbers listed in the solvent component in Table 3 below indicate the content ratio of the solvent component relative to the total weight. In addition, the evaporation time for each prepared adhesive composition is also shown in Table 3 below. In Table 3, Reference Example 1 is one of the conventionally used adhesive compositions and polyethylene oxide (PEO) was used instead of PVDF-HFP. In Table 3, Reference Example 2 is one of the conventionally used adhesive compositions.

**[Table 3]**

| Classification | PVDF-HFP concentration (mass%) | Solvent component (by weight) | Evaporation time (sec) |
|---|---|---|---|
| Reference Example 1 | 3 (PEO is used instead of PVDF-HFP) | Acetonitrile 100 | 212.6 |
| Reference Example 2 | 10 | Acetone 100 | 80 |
| Example 1 | 10 | Acetone:butyl | 220.8 |
| | | acetate=70:30 | |
| Example 2 | 10 | Acetone:butyl | 259 |
| | | acetate=65:35 | |
| Example 3 | 10 | Acetone:butyl | 276.4 |
| | | acetate=60:40 | |
| Example 4 | 10 | Acetone:butyl | 170 |
| | | acetate=75:25 | |
| Example 5 | 10 | Acetone:butyl | 132.4 |
| | | acetate=80:20 | |
| Comparative Example 1 | 10 | Acetone:butyl | 114.8 |
| | | acetate=85:15 | |
| Comparative Example 2 | 10 | Acetone:butyl | 92.8 |
| | | acetate=90: 10 | |

Referring to Table 3, the evaporation time of Reference Example 1 may be an appropriate time for the solvent component to evaporate and exhibit adhesive performance while preventing the solvent component from evaporating prematurely. Referring Table 3, the evaporation time of Reference Example 2 may be the time when the solvent component evaporates prematurely. Referring to Table 3, since Examples 1 to 5 had an evaporation time similar to that of Reference Example 1, the solvent component may be prevented from evaporating prematurely and exhibit adhesive performance after evaporating at an appropriate time.

Referring to Table 3, since Comparative Examples 1 and 2 had an evaporation time similar to that of Reference Example 2, the solvent component may evaporate prematurely.

**In** addition, adhesive compositions were prepared according to Table 4 below. The adhesive compositions according to Table 4 below were prepared by dissolving the polyvinylidene fluoride-hexafluoropropylene copolymer (PVDF-HFP) in a solvent component. The concentration of PVDF-HFP is the weight of PVDF-HFP relative to the total weight of the adhesive composition and is shown in Table 4 below. In Table 4, the mixed solvent is a solvent in which acetone and butyl acetate were mixed at a weight ratio of 70:30 (acetone:butyl acetate). The results of measuring the contact angle, adhesive strength, separator permeability, and viscosity change over time of each adhesive composition are shown in Table 4 below. In Table 4, Reference Example 1 is one of the conventionally used adhesive compositions and polyethylene oxide (PEO) was used instead of the PVDF-HFP. In Table 4, Reference Example 2 is one of the conventionally used adhesive compositions.

**[Table 4]**

| Classification | PVDF-HFP concentration (mass%) | Solvent component | Contact angle (degree) | AE (%) | Af (N/mm) | Separator permeability | VR (%) |
|---|---|---|---|---|---|---|---|
| Reference Example 1 | 3 (PEO is used instead of PVDF-HFP) | Acetonitrile | 37.3 | 0 | 0 | No permeation (PASS) | 0 |
| Reference Example 2 | 10 | Acetone | 37.8 | About 150 | 0.13 to 0.15 | No permeation (PASS) | 0 |
| Example 1 | 10 | Mixed solvent | 35.2 | About 100 | 0.12 to 0.16 | No permeation (PASS) | 0 |
| Example 6 | 11 | Mixed solvent | 36.0 | About 100 | 0.12 to 0.15 | No permeation (PASS) | 0 |
| Example 7 | 9 | Mixed solvent | 33.6 | About 100 | 0.12 to 0.15 | No permeation (PASS) | 0 |
| Example 8 | 8 | Mixed solvent | 22.5 | About 100 | 0.12 to 0.15 | No permeation (PASS) | 0 |
| Comparative Example 3 | 7 | Mixed solvent | 22.7 | About 100 | 0.12 to 0.14 | 1 separator permeation (NG) | - |
| Comparative Example 4 | 6 | Mixed solvent | 16.1 | - | - | 2 separators permeation (NG) | - |
| Comparative Example 5 | 5 | Mixed solvent | 14.9 | About 110 | 0.09 to 0.13 | 3 separators permeation (NG) | - |
| Comparative Example 6 | 12 | Mixed solvent | 38.1 | - | - | No permeation (PASS) | - |
| Comparative Example 7 | 13 | Mixed solvent | 41.4 | - | - | No permeation (PASS) | - |
| Comparative Example 8 | 14 | Mixed solvent | 45.5 | - | - | No permeation (PASS) | - |
| Comparative Example 9 | 15 | Mixed solvent | 45.0 | About 110 | 0.12 to 0.15 | No permeation (PASS) | - |

Referring to Table 4, Reference Example 1 and Reference Example 2 had a contact angle of about 35 to 40 degrees. When the contact angle is larger than the contact angle of Reference Examples 1 and 2, the adhesive composition is highly likely to form droplets. When the contact angle is the same as or smaller than the contract angle of Reference Examples 1 and 2, the adhesive composition may be prevented from forming droplets. Referring to Table 4, since the contact angle of Example 1, Examples 6 to 8, and Comparative Examples 3 to 5 was the same as or smaller than that of Reference Examples 1 and 2, each adhesive composition may be prevented from forming droplets. On the other hand, since the contact angle of Comparative Examples 6 to 9 was larger than that of Reference Examples 1 and 2, each adhesive composition is highly likely to form droplets.

Referring to Table 4, Reference Example 1 had insufficient adhesive strength after being impregnated with an electrolyte because adhesive strength was reduced due to the electrolyte. In other words, Reference Example 1, a conventionally used adhesive composition, had an appropriate evaporation time (see Table 3 above), but adhesive strength was reduced due to electrolyte decomposition.

Referring to Table 4, Reference Example 2 had sufficient adhesive strength even after being impregnated with an electrolyte but had a problem in that the solvent component evaporated prematurely (see Table 3 above).

Referring to Table 4, Example 1 and Examples 6 to 8 did not lose adhesive strength due to an electrolyte and had sufficient adhesive strength even after being impregnated with the electrolyte. In addition, in Example 1 and Examples 6 to 8, the solvent component may be prevented from evaporating prematurely through an appropriate combination of solvents, and adhesive performance may be exhibited by evaporating at an appropriate time (see Table 3 above). Referring to Table 4, Example 1 and Examples 6 to 8 did not show separator permeability and a viscosity change over time.

**In** addition, although not directly evaluated, it is expected that Examples 2 to 5 will have similar results to the result of Example 1 or Examples 6 to 8.

Referring to Table 4, Comparative Examples 3 to 5 had separator permeability, which may affect the electrode assembly and reduce the physical properties of the battery cell. Since Comparative Examples 6 to 9 had a larger contact angle compared to Reference Examples 1 and 2, each adhesive composition is highly likely to form droplets.

The present disclosure can provide an adhesive composition, which solves the problem of reduced adhesive strength due to electrolyte decomposition.

The present disclosure can provide an adhesive composition, which prevents the solvent component from evaporating prematurely through an appropriate combination of the adhesive component and the solvent component, which dissolves or disperses the adhesive component, and exhibits sufficient adhesive strength by increasing the solubility of the adhesive component through the appropriate combination.

The present disclosure can provide an adhesive composition, which can be applied to a desired location by suppressing the formation of droplets.

The present disclosure can provide an adhesive composition, which is easily stored due to small changes over time at room temperature and minimizes the impact on an electrode assembly due to its low separator permeability.

The present disclosure can provide an adhesive composition with excellent stability and processability.

The present disclosure can provide an adhesive formed from the adhesive composition, and a battery cell and a battery cell assembly including the adhesive. In addition, the present disclosure can provide an electrical device including one or more selected from the group consisting of the battery cell and the battery cell assembly.

The present disclosure can be widely applied to electric vehicles, battery charging stations, energy storage systems (ESSs), and green technology fields such as photovoltaics and wind power utilizing batteries. In addition, the present disclosure may be used for eco-friendly mobility including electric and hybrid vehicles to prevent climate change by reducing air pollution and greenhouse gas emissions.

## Claims

1. Use of an adhesive composition in a battery cell, the adhesive composition comprising:
a resin component including a polyvinylidene fluoride (PVDF) polymer; and
a solvent component including a first solvent and a second solvent,
wherein the first solvent has a vapor pressure (P₁) of 13,332.24 Pa (100 mmHg) or more at 20 °C,
the second solvent has a vapor pressure (P₂) of 6,666.12 Pa (50 mmHg) or less at 20 °C, and
the solubility of the resin component at 25 °C in 100 g of a mixed solvent of the first solvent and the second solvent at a weight ratio of 5 5, determined according to the method defined in the description, is 20 g or more,
wherein the resin component is included in a range of 8 wt% to 11 wt% based on the total weight, and
wherein the solvent component includes the first solvent in an amount of 60 wt% to 80 wt% based on the total weight of the solvent component.

2. An adhesive composition comprising:
a resin component; and
a solvent component including a first solvent and a second solvent,
wherein the first solvent has a vapor pressure (P₁) of 13,332.24 Pa (100 mmHg) or more at 20 °C,
the second solvent has a vapor pressure (P₂) of 6,666.12 Pa (50 mmHg) or less at 20 °C, and
the solubility of the resin component at 25 °C in 100 g of a mixed solvent of the first solvent and the second solvent at a weight ratio of 5 5, determined according to the method defined in the description, is 20 g or more,
wherein the resin component is included in a range of 8 wt% to 11 wt% based on the total weight, and
wherein the solvent component includes the first solvent in an amount of 60 wt% to 80 wt% based on the total weight of the solvent component, and
wherein the resin component includes a polyvinylidene fluoride-hexafluoropropylene copolymer (PVDF-HFP).

3. The use of claim 1, or the adhesive composition of claim 2, wherein A_{E} according to Equation 1 below is 60% or more: [Equation 1] ${A}_{E} = {A}_{f} / {A}_{i} X 100 \left(%\right)$
in Equation 1, Aᵢ is the peel strength measured at 25 °C after applying the adhesive composition to a polyethylene terephthalate (PET) film, drying it until all solvent components evaporate, attaching an exposed side of the dried adhesive composition to a metal plate, and peeling the PET film at a peeling angle of 90 degrees and a peeling speed of 300 mm/min, and
A_{f} is the peel strength measured at 25 °C after applying the adhesive composition to a polyethylene terephthalate (PET) film, drying it until all solvent components evaporate, impregnating it with an electrolyte including a carbonate solvent for 20 seconds, drying it until all solvent of the electrolyte evaporates, attaching an exposed side of the dried adhesive composition to a metal plate, and peeling the PET film at a peeling angle of 90 degrees and a peeling speed of 300 mm/min, determined as specified in the description.

4. The use of claim 1 or 3, or the adhesive composition of claim 2 or 3, wherein A_{f} is 0.1 N/mm or more.

5. The use of claims 1, 3, or 4, or the adhesive composition of any one of claims 2 to 4, wherein the ratio (P₁/P₂) of the vapor pressure of the first solvent (P₁) to the vapor pressure of the second solvent (P₂) ranges from 5 to 50.

6. The use of any one of claims 1 or 3 to 5, or the adhesive composition of any one of claims 2 to 5, wherein the first solvent has a normal boiling point (P_{B1}) of 100 °C or less, and/or
wherein the second solvent has a normal boiling point (P_{B2}) of 100 °C or more, and/or
wherein the ratio (P_{B1}/P_{B2}) of the normal boiling point of the first solvent (P_{B1}, units: °C) to the normal boiling point of the second solvent (P_{B2}, units: °C) ranges from 0.01 to 0.95.

7. The use of any one of claims 1 or 3 to 6, or the adhesive composition of any one of claims 2 to 6, wherein SP_{R1} according to Equation 2 below ranges from 0.8 to 1.2; and/or
wherein SP_{R2} according to Equation 3 below ranges from 0.8 to 1.2: [Equation 2] ${SP}_{R 1} = {SP}_{1} / {SP}_{P}$
in Equation 2, SP₁ is the Hansen solubility parameter (units: MPa^{1/2}) at 25 °C for the first solvent, and SP_{P} is the Hansen solubility parameter (units: MPa^{1/2}) at 25 °C for the resin component; [Equation 3] ${SP}_{R 2} = {SP}_{1} / {SP}_{2}$
in Equation 3, SP₁ is the Hansen solubility parameter (units: MPa^{1/2}) at 25 °C for the first solvent, and SP₂ is the Hansen solubility parameter (units: MPa^{1/2}) at 25 °C for the second solvent.

8. The use of any one of claims 1 or 3 to 7, or the adhesive composition of any one of claims 2 to 7, wherein the first solvent includes a ketone group in its molecule, and/or
wherein the second solvent includes an ester group in its molecule.

9. The use of any one of claims 1 or 3 to 8, or the adhesive composition of any one of claims 2 to 8, wherein the contact angle of the adhesive composition for the PET film at 25 °C is smaller than the contact angle of the first solvent for the PET film at 25 °C, wherein the contact angle is determined as specified in the description.

10. The use of any one of claims 1 or 3 to 9, or the adhesive composition of any one of claims 2 to 9,
wherein the solvent component includes the second solvent in an amount of 25 parts by weight to 100 parts by weight based on 100 parts by weight of the first solvent.

11. A battery cell comprising:
an electrode assembly, which includes a positive electrode, a negative electrode, and a separator interposed between the positive electrode and the negative electrode; and
a finishing material,
wherein an adhesive formed from an adhesive composition is provided on at least a portion of the finishing material, wherein the adhesive composition comprises a resin component including a polyvinylidene fluoride (PVDF) polymer; and
a solvent component including a first solvent and a second solvent,
wherein the first solvent has a vapor pressure (P₁) of 13,332.24 Pa (100 mmHg) or more at 20 °C,
the second solvent has a vapor pressure (P₂) of 6,666.12 Pa (50 mmHg) or less at 20 °C, and
the solubility of the resin component at 25 °C in 100 g of a mixed solvent of the first solvent and the second solvent at a weight ratio of 5 5, determined according to the method defined in the description, is 20 g or more,
wherein the resin component is included in a range of 8 wt% to 11 wt% based on the total weight, and
wherein the solvent component includes the first solvent in an amount of 60 wt% to 80 wt% based on the total weight of the solvent component.

12. The battery cell of claim 11, wherein the adhesive composition is as defined in any one of claims 2 to 10.

13. The battery cell of claim 11 or 12, wherein the finishing material is at least a part of the separator of the electrode assembly, and at least a portion of each of the finishing material and the electrode assembly is bonded by the adhesive.

14. A battery cell assembly comprising one or more battery cells, which are the battery cell of any one of claims 11 to 13.

15. An electrical device comprising one or more selected from the group consisting of one or more battery cells and one or more battery cell assemblies,
wherein the battery cell is the battery cell of any one of claims 11 to 13, and wherein the battery cell assembly is the battery cell assembly of claim 14.

## Patentansprüche

1. Verwendung einer Klebstoffzusammensetzung in einer Batteriezelle, wobei die Klebstoffzusammensetzung umfasst:
eine Harzkomponente, die ein Polyvinylidenfluorid(PVDF)-Polymer enthält; und
eine Lösungsmittelkomponente, die ein erstes Lösungsmittel und ein zweites Lösungsmittel umfasst,
wobei das erste Lösungsmittel einen Dampfdruck (P₁) von 13.332,24 Pa (100 mmHg) oder mehr bei 20 °C aufweist,
das zweite Lösungsmittel einen Dampfdruck (P₂) von 6.666,12 Pa (50 mmHg) oder weniger bei 20 °C aufweist, und
die Löslichkeit der Harzkomponente bei 25 °C in 100 g eines gemischten Lösungsmittels aus dem ersten Lösungsmittel und dem zweiten Lösungsmittel bei einem Gewichtsverhältnis von 5:5, bestimmt gemäß dem in der Beschreibung definierten Verfahren, 20 g oder mehr beträgt,
wobei die Harzkomponente in einem Bereich von 8 Gew.-% bis 11 Gew.-%, bezogen auf das Gesamtgewicht, enthalten ist, und
wobei die Lösungsmittelkomponente das erste Lösungsmittel in einer Menge von 60 Gew.-% bis 80 Gew.-%, bezogen auf das Gesamtgewicht der Lösungsmittelkomponente, enthält.

2. Klebstoffzusammensetzung, umfassend:
eine Harzkomponente; und
eine Lösungsmittelkomponente, die ein erstes Lösungsmittel und ein zweites Lösungsmittel umfasst,
wobei das erste Lösungsmittel einen Dampfdruck (P₁) von 13.332,24 Pa (100 mmHg) oder mehr bei 20 °C aufweist,
das zweite Lösungsmittel einen Dampfdruck (P₂) von 6.666,12 Pa (50 mmHg) oder weniger bei 20 °C aufweist, und
die Löslichkeit der Harzkomponente bei 25 °C in 100 g eines gemischten Lösungsmittels aus dem ersten Lösungsmittel und dem zweiten Lösungsmittel bei einem Gewichtsverhältnis von 5:5, bestimmt gemäß dem in der Beschreibung definierten Verfahren, 20 g oder mehr beträgt,
wobei die Harzkomponente in einem Bereich von 8 Gew.-% bis 11 Gew.-%, bezogen auf das Gesamtgewicht, enthalten ist, und
wobei die Lösungsmittelkomponente das erste Lösungsmittel in einer Menge von 60 Gew.-% bis 80 Gew.-%, bezogen auf das Gesamtgewicht der Lösungsmittelkomponente, enthält, und
wobei die Harzkomponente ein Polyvinylidenfluorid-Hexafluorpropylen-Copolymer (PVDF-HFP) enthält.

3. Verwendung gemäß Anspruch 1 oder Klebstoffzusammensetzung gemäß Anspruch 2, wobei A_{E} gemäß der nachstehenden Gleichung 1 60 % oder mehr beträgt: [Gleichung 1] ${A}_{E} = {A}_{f} / {A}_{i} X 100 \left(%\right)$
In Gleichung 1 Aᵢ die Schälfestigkeit ist, gemessen bei 25 °C nach dem Aufbringen der Klebstoffzusammensetzung auf einen Polyethylenterephthalat(PET)-Film, dem Trocknen desselben, bis alle Lösungsmittelkomponenten verdampfen, dem Anbringen einer freiliegenden Seite der getrockneten Klebstoffzusammensetzung an einer Metallplatte und dem Schälen des PET-Films bei einem Schälwinkel von 90 Grad und einer Schälgeschwindigkeit von 300 mm/min, und
A_{f} die Schälfestigkeit ist, gemessen bei 25 °C nach dem Aufbringen der Klebstoffzusammensetzung auf einen Polyethylenterephthalat(PET)-Film, dem Trocknen desselben, bis alle Lösungsmittelkomponenten verdampfen, dem Imprägnieren desselben mit einem Elektrolyten, der ein Carbonat-Lösungsmittel enthält, für 20 Sekunden, dem Trocknen desselben, bis das gesamte Lösungsmittel des Elektrolyten verdampft, dem Anbringen einer freiliegenden Seite der getrockneten Klebstoffzusammensetzung an einer Metallplatte und dem Schälen des PET-Films bei einem Schälwinkel von 90 Grad und einer Schälgeschwindigkeit von 300 mm/min, bestimmt wie in der Beschreibung angegeben.

4. Verwendung gemäß Anspruch 1 oder 3, oder Klebstoffzusammensetzung gemäß Anspruch 2 oder 3, wobei A_{f} 0,1 N/mm oder mehr beträgt.

5. Verwendung gemäß Anspruch 1, 3 oder 4, oder Klebstoffzusammensetzung gemäß einem der Ansprüche 2 bis 4, wobei das Verhältnis (P₁/P₂) des Dampfdrucks des ersten Lösungsmittels (P₁) zu dem Dampfdruck des zweiten Lösungsmittels (P₂) im Bereich von 5 bis 50 liegt.

6. Verwendung gemäß einem der Ansprüche 1 oder 3 bis 5, oder Klebstoffzusammensetzung gemäß einem der Ansprüche 2 bis 5, wobei das erste Lösungsmittel einen normalen Siedepunkt (P_{B1}) von 100 °C oder weniger aufweist, und/oder
wobei das zweite Lösungsmittel einen normalen Siedepunkt (P_{B2}) von 100 °C oder mehr aufweist, und/oder
wobei das Verhältnis (P_{B1}/P_{B2}) des normalen Siedepunkts des ersten Lösungsmittels (P_{B1}, Einheiten: °C) zu dem normalen Siedepunkt des zweiten Lösungsmittels (P_{B2}, Einheiten: °C) im Bereich von 0,01 bis 0,95 liegt.

7. Verwendung gemäß einem der Ansprüche 1 oder 3 bis 6, oder Klebstoffzusammensetzung gemäß einem der Ansprüche 2 bis 6, wobei SP_{R1} gemäß der nachstehenden Gleichung 2 im Bereich von 0,8 bis 1,2 liegt; und/oder
wobei SP_{R2} gemäß der nachstehenden Gleichung 3 im Bereich von 0,8 bis 1,2 liegt: [Gleichung 2] ${SP}_{R 1} = {SP}_{1} / {SP}_{P}$
in Gleichung 2 SP₁ der Hansen-Löslichkeitsparameter (Einheiten: MPa^{1/2}) bei 25 °C für das erste Lösungsmittel ist und SP_{P} der Hansen-Löslichkeitsparameter (Einheiten: MPa^{1/2}) bei 25 °C für die Harzkomponente ist; [Gleichung 3] ${SP}_{R 2} = {SP}_{1} / {SP}_{2}$
in Gleichung 3 SP₁ der Hansen-Löslichkeitsparameter (Einheiten: MPa^{1/2}) bei 25 °C für das erste Lösungsmittel ist und SP₂ der Hansen-Löslichkeitsparameter (Einheiten: MPa^{1/2}) bei 25 °C für das zweite Lösungsmittel ist.

8. Verwendung gemäß einem der Ansprüche 1 oder 3 bis 7 oder Klebstoffzusammensetzung gemäß einem der Ansprüche 2 bis 7, wobei das erste Lösungsmittel eine Ketogruppe in seinem Molekül enthält, und/oder
wobei das zweite Lösungsmittel eine Estergruppe in seinem Molekül enthält.

9. Verwendung gemäß einem der Ansprüche 1 oder 3 bis 8 oder Klebstoffzusammensetzung gemäß einem der Ansprüche 2 bis 8, wobei der Kontaktwinkel der Klebstoffzusammensetzung für den PET-Film bei 25 °C kleiner ist als der Kontaktwinkel des ersten Lösungsmittels für den PET-Film bei 25 °C, wobei der Kontaktwinkel wie in der Beschreibung angegeben bestimmt wird.

10. Verwendung gemäß einem der Ansprüche 1 oder 3 bis 9, oder Klebstoffzusammensetzung gemäß einem der Ansprüche 2 bis 9,
wobei die Lösungsmittelkomponente das zweite Lösungsmittel in einer Menge von 25 Gewichtsteilen bis 100 Gewichtsteilen, bezogen auf 100 Gewichtsteile des ersten Lösungsmittels, enthält.

11. Batteriezelle, umfassend:
eine Elektrodenanordnung, die eine positive Elektrode, eine negative Elektrode und einen zwischen der positiven Elektrode und der negativen Elektrode angeordneten Separator umfasst; und
ein Endbearbeitungsmaterial,
wobei ein aus einer Klebstoffzusammensetzung gebildeter Klebstoff auf mindestens einem Teil des Endbearbeitungsmaterials bereitgestellt ist, wobei die Klebstoffzusammensetzung eine Harzkomponente umfasst, die ein Polyvinylidenfluorid(PVDF)-Polymer enthält; und
eine Lösungsmittelkomponente, die ein erstes Lösungsmittel und ein zweites Lösungsmittel umfasst,
wobei das erste Lösungsmittel einen Dampfdruck (P₁) von 13.332,24 Pa (100 mmHg) oder mehr bei 20 °C aufweist,
das zweite Lösungsmittel einen Dampfdruck (P₂) von 6.666,12 Pa (50 mmHg) oder weniger bei 20 °C aufweist, und
die Löslichkeit der Harzkomponente bei 25 °C in 100 g eines gemischten Lösungsmittels aus dem ersten Lösungsmittel und dem zweiten Lösungsmittel bei einem Gewichtsverhältnis von 5:5, bestimmt gemäß dem in der Beschreibung definierten Verfahren, 20 g oder mehr beträgt,
wobei die Harzkomponente in einem Bereich von 8 Gew.-% bis 11 Gew.-%, bezogen auf das Gesamtgewicht, enthalten ist, und
wobei die Lösungsmittelkomponente das erste Lösungsmittel in einer Menge von 60 Gew.-% bis 80 Gew.-%, bezogen auf das Gesamtgewicht der Lösungsmittelkomponente, enthält.

12. Batteriezelle gemäß Anspruch 11, wobei die Klebstoffzusammensetzung wie in einem der Ansprüche 2 bis 10 festgelegt ist.

13. Batteriezelle gemäß Anspruch 11 oder 12, wobei das Endbearbeitungsmaterial mindestens ein Teil des Separators der Elektrodenanordnung ist und mindestens ein Teil sowohl des Endbearbeitungsmaterials als auch der Elektrodenanordnung durch den Klebstoff verbunden ist.

14. Batteriezellenanordnung, umfassend eine oder mehrere Batteriezellen, die die Batteriezelle gemäß einem der Ansprüche 11 bis 13 sind.

15. Elektrische Vorrichtung, umfassend eine oder mehrere ausgewählt aus der Gruppe bestehend aus einer oder mehreren Batteriezellen und einer oder mehreren Batteriezellenanordnungen,
wobei die Batteriezelle die Batteriezelle gemäß einem der Ansprüche 11 bis 13 ist, und wobei die Batteriezellenanordnung die Batteriezellenanordnung gemäß Anspruch 14 ist.

## Revendications

1. Utilisation d'une composition adhésive dans une cellule de batterie, la composition adhésive comprenant :
un composant de résine incluant un polymère de fluorure de polyvinylidène (PVDF) ; et
un composant de solvant incluant un premier solvant et un second solvant,
où le premier solvant a une pression de vapeur (P₁) de 13 332,24 Pa (100 mmHg) ou plus à 20 °C,
le second solvant a une pression de vapeur (P₂) de 6 666,12 Pa (50 mmHg) ou moins à 20 °C, et
la solubilité du composant de résine à 25 °C dans 100 g d'un solvant mixte du premier solvant et du second solvant à un rapport en poids de 5:5, déterminée selon le procédé défini dans la description, est de 20 g ou plus,
où le composant de résine est inclus dans une plage de 8 % en poids à 11 % en poids sur la base du poids total, et
où le composant de solvant inclut le premier solvant en une quantité de 60 % en poids à 80 % en poids sur la base du poids total du composant de solvant.

2. Composition adhésive comprenant :
un composant de résine ; et
un composant de solvant incluant un premier solvant et un second solvant,
où le premier solvant a une pression de vapeur (P₁) de 13 332,24 Pa (100 mmHg) ou plus à 20 °C,
le second solvant a une pression de vapeur (P₂) de 6 666,12 Pa (50 mmHg) ou moins à 20 °C, et
la solubilité du composant de résine à 25 °C dans 100 g d'un solvant mixte du premier solvant et du second solvant à un rapport en poids de 5:5, déterminée selon le procédé défini dans la description, est de 20 g ou plus,
où le composant de résine est inclus dans une plage de 8 % en poids à 11 % en poids sur la base du poids total, et
où le composant de solvant inclut le premier solvant en une quantité de 60 % en poids à 80 % en poids sur la base du poids total du composant de solvant, et
où le composant de résine inclut un copolymère de fluorure de polyvinylidène-hexafluoropropylène (PVDF-HFP).

3. Utilisation selon la revendication 1, ou composition adhésive selon la revendication 2, où A_{E} selon l'Équation 1 ci-dessous est de 60 % ou plus : [Équation 1] ${A}_{E} = {A}_{f} / {A}_{i} X 100 \left(%\right)$
dans l'Équation 1, Aᵢ est la résistance au pelage mesurée à 25 °C après l'application de la composition adhésive sur un film de polyéthylène téréphtalate (PET), son séchage jusqu'à ce que tous les composants de solvant s'évaporent, la fixation d'un côté exposé de la composition adhésive séchée à une plaque métallique, et le pelage du film PET à un angle de pelage de 90 degrés et à une vitesse de pelage de 300 mm/min, et
A_{f} est la résistance au pelage mesurée à 25 °C après l'application de la composition adhésive sur un film de polyéthylène téréphtalate (PET), son séchage jusqu'à ce que tous les composants de solvant s'évaporent, son imprégnation avec un électrolyte incluant un solvant carbonate pendant 20 secondes, son séchage jusqu'à ce que tous les solvants de l'électrolyte s'évaporent, la fixation d'un côté exposé de la composition adhésive séchée à une plaque métallique, et le pelage du film PET à un angle de pelage de 90 degrés et à une vitesse de pelage de 300 mm/min, déterminé comme spécifié dans la description.

4. Utilisation selon la revendication 1 ou 3, ou composition adhésive selon la revendication 2 ou 3, où A_{f} est de 0,1 N/mm ou plus.

5. Utilisation selon la revendication 1, 3 ou 4, ou composition adhésive selon l'une quelconque des revendications 2 à 4, où le rapport (P1/P2) de la pression de vapeur du premier solvant (P1) à la pression de vapeur du second solvant (P2) est compris entre 5 et 50.

6. Utilisation selon l'une quelconque des revendications 1 ou 3 à 5, ou composition adhésive selon l'une quelconque des revendications 2 à 5, où le premier solvant a un point d'ébullition normal (P_{B1}) de 100 °C ou moins, et/ou
où le second solvant a un point d'ébullition normal (P_{B2}) de 100 °C ou plus, et/ou
où le rapport (P_{B1}/P_{B2}) du point d'ébullition normal du premier solvant (P_{B1}, unités : °C) au point d'ébullition normal du second solvant (P_{B2}, unités : °C) est compris entre 0,01 et 0,95.

7. Utilisation selon l'une quelconque des revendications 1 ou 3 à 6, ou composition adhésive selon l'une quelconque des revendications 2 à 6, où SP_{R1} selon l'Équation 2 ci-dessous est compris entre 0,8 et 1,2 ; et/ou
où SP_{R2} selon l'Équation 3 ci-dessous est compris entre 0,8 et 1,2 : [Équation 2] ${SP}_{R 1} = {SP}_{1} / {SP}_{P}$
dans l'Équation 2, SP₁ est le paramètre de solubilité Hansen (unités : MPa^{1/2}) à 25 °C pour le premier solvant, et SP_{P} est le paramètre de solubilité Hansen (unités : MPa^{1/2}) à 25 °C pour le composant de résine ; [Équation 3] ${SP}_{R 2} = {SP}_{1} / {SP}_{2}$
dans l'Équation 3, SP₁ est le paramètre de solubilité Hansen (unités : MPa^{1/2}) à 25 °C pour le premier solvant, et SP₂ est le paramètre de solubilité Hansen (unités : MPa^{1/2}) à 25 °C pour le second solvant.

8. Utilisation selon l'une quelconque des revendications 1 ou 3 à 7, ou composition adhésive selon l'une quelconque des revendications 2 à 7, où le premier solvant inclut un groupe cétone dans sa molécule, et/ou
où le second solvant inclut un groupe ester dans sa molécule.

9. Utilisation selon l'une quelconque des revendications 1 ou 3 à 8, ou composition adhésive selon l'une quelconque des revendications 2 à 8, où l'angle de contact de la composition adhésive pour le film PET à 25 °C est inférieur à l'angle de contact du premier solvant pour le film PET à 25 °C, où l'angle de contact est déterminé comme spécifié dans la description.

10. Utilisation selon l'une quelconque des revendications 1 ou 3 à 9, ou composition adhésive selon l'une quelconque des revendications 2 à 9,
où le composant de solvant inclut le second solvant en une quantité de 25 parties en poids à 100 parties en poids sur la base de 100 parties en poids du premier solvant.

11. Cellule de batterie comprenant :
un ensemble d'électrodes, qui inclut une électrode positive, une électrode négative, et un séparateur interposé entre l'électrode positive et l'électrode négative ; et
un matériau de finition,
où un adhésif formé à partir d'une composition adhésive est fourni sur au moins une partie du matériau de finition, où la composition adhésive comprend un composant de résine incluant un polymère de fluorure de polyvinylidène (PVDF) ; et
un composant de solvant incluant un premier solvant et un second solvant,
où le premier solvant a une pression de vapeur (P₁) de 13 332,24 Pa (100 mmHg) ou plus à 20 °C,
le second solvant a une pression de vapeur (P₂) de 6 666,12 Pa (50 mmHg) ou moins à 20 °C, et
la solubilité du composant de résine à 25 °C dans 100 g d'un solvant mixte du premier solvant et du second solvant à un rapport en poids de 5:5, déterminée selon le procédé défini dans la description, est de 20 g ou plus,
où le composant de résine est inclus dans une plage de 8 % en poids à 11 % en poids sur la base du poids total, et
où le composant de solvant inclut le premier solvant en une quantité de 60 % en poids à 80 % en poids sur la base du poids total du composant de solvant.

12. Cellule de batterie selon la revendication 11, où la composition adhésive est telle que définie dans l'une quelconque des revendications 2 à 10.

13. Cellule de batterie selon la revendication 11 ou 12, où le matériau de finition est au moins une partie du séparateur de l'ensemble d'électrodes, et au moins une partie de chacun du matériau de finition et de l'ensemble d'électrodes est liée par l'adhésif.

14. Ensemble de cellules de batterie comprenant une ou plusieurs cellules de batterie, qui sont la cellule de batterie selon l'une quelconque des revendications 11 à 13.

15. Dispositif électrique comprenant un ou plusieurs éléments sélectionnés dans le groupe constitué d'une ou plusieurs cellules de batterie et d'un ou plusieurs ensembles de cellules de batterie,
où la cellule de batterie est la cellule de batterie selon l'une quelconque des revendications 11 à 13, et où l'ensemble de cellules de batterie est l'ensemble de cellules de batterie selon la revendication 14.
